# EUROPEAN PATENT APPLICATION

(11) **EP 4 761 143 A1**
(43) Date of publication of application: **17.06.2026**
(21) Application number: 24864487.4
(22) Date of filing: 02.09.2024
(51) Int. Cl.: H04B 10/40, H04Q 11/00, H04B 10/25

(54) **OPTICAL MODULE, NETWORK DEVICE AND DATA TRANSMISSION METHOD**

(30) Priority: 13.09.2023 CN 202311182736
(71) Applicant: HUAWEI TECHNOLOGIES CO., LTD., Shenzhen 518129 (CN)
(72) Inventor: ZHAI, Houming, Shenzhen, Guangdong 518129 (CN); CHEN, Jingfeng, Shenzhen, Guangdong 518129 (CN); SHI, Guangjun, Shenzhen, Guangdong 518129 (CN); FENG, Xiaoliang, Shenzhen, Guangdong 518129 (CN); DUAN, Jianhong, Shenzhen, Guangdong 518129 (CN)
(74) Representative: MERH-IP Matias Erny Reichl Hoffmann Patentanwälte PartG mbB
(86) International application number: PCT/CN2024/116214
(87) International publication number: WO 2025/055765

(57) **Abstract**

This application provides an optical module, a network device, and a data transmission method, and pertains to the field of optical communication. The optical module with a FlexE interface converts a system-side FlexE block stream into a plurality of Ethernet block streams by using a characteristic of FlexE channelization, and sends an optical signal generated by electrical-to-optical conversion, so that one interface that is of the optical module and that is interconnected with a network device is mapped to a plurality of optical interfaces. Therefore, density of optical interfaces is improved, to help implement high-density breakout of optical interfaces.

## Description

This application claims priority to Chinese Patent Application No. 202311182736.0, filed with the China National Intellectual Property Administration on September 13, 2023 and entitled "OPTICAL MODULE, NETWORK DEVICE, AND DATA TRANSMISSION METHOD", which is incorporated herein by reference in its entirety.

### TECHNICAL FIELD

This application relates to the field of optical communication, and specifically, to an optical module, a network device, and a data transmission method.

### BACKGROUND

In a current breakout optical module, a quantity of channels (transmission channels of optical signals) provided by line-side interfaces (optical interfaces) is the same as a quantity of channels (transmission channels of electrical signals) provided by system-side interfaces (electrical interfaces). Consequently, density of the line-side interfaces (optical interfaces) is insufficient, and an interface capability of a network device is limited.

### SUMMARY

Embodiments of this application provide an optical module, a network device, and a data transmission method, to improve density of optical interfaces.

According to a first aspect, an optical module is provided, including a flexible Ethernet (flexible Ethernet, FlexE) interface, a processing circuit, an optoelectrical conversion device, and a plurality of optical interfaces. The FlexE interface is configured to receive a first FlexE block stream from a network device through a FlexE channel, and the FlexE interface is communicatively connected to the network device through the FlexE channel. The processing circuit is configured to obtain a plurality of first Ethernet block streams based on the first FlexE block stream. The optoelectrical conversion device is configured to perform electrical-to-optical conversion on the plurality of first Ethernet block streams, to obtain a plurality of first optical signals. The plurality of optical interfaces are configured to send the plurality of first optical signals to an optical fiber.

The FlexE interface may also be referred to as a system-side interface. The optical interface may also be referred to as a line-side interface. The optical interface is, for example, an Ethernet interface.

According to the first aspect, the optical module with the FlexE interface is provided, converts a system-side FlexE block stream into a plurality of Ethernet block streams by using a characteristic of FlexE channelization, and then sends an optical signal generated by electrical-to-optical conversion, so that one interface (the FlexE interface) that is of the optical module and that is interconnected with the network device is mapped to the plurality of optical interfaces. Therefore, density of optical interfaces is improved, to help implement high-density breakout of optical interfaces.

In some implementations, the processing circuit includes a FlexE shim circuit and a transcoding circuit. The FlexE shim circuit is configured to obtain a plurality of first FlexE client block streams based on the first FlexE block stream, where the plurality of first FlexE client block streams include a block in a FlexE encoding format. The transcoding circuit is configured to convert an encoding format of a block in the plurality of first FlexE client block streams from the FlexE encoding format into an Ethernet encoding format, to obtain the plurality of first Ethernet block streams.

In some scenarios, a block in the FlexE encoding format and a block in the Ethernet encoding format have different encoding formats. Because the transcoding circuit converts the encoding format of the block from the FlexE encoding format into the Ethernet encoding format, the optical interface adapts to a standard Ethernet interface (for example, an Ethernet interface that complies with the IEEE 802.3 standard). This reduces complexity of decoding a block by a remote device connected to the optical module through the optical fiber, and reduces a risk of a decoding failure when the remote device decodes a block stream based on the Ethernet encoding format after the block stream is transmitted to the remote device.

In some implementations, the FlexE shim circuit is configured to perform slot mapping on the first FlexE block stream based on slot configuration information, to obtain the plurality of first FlexE client block streams. The slot configuration information indicates at least one of a quantity of slots occupied by the plurality of first FlexE client block streams or slot positions occupied by the plurality of first FlexE client block streams.

Conversion between a FlexE block stream and a FlexE client block stream is implemented based on slot configuration information by using a feature of flexible configurability of the FlexE shim, so that a quantity of optical interfaces and transmission rates of the optical interfaces are configurable, to improve flexibility.

In some implementations, the plurality of first Ethernet block streams include a first Ethernet block stream with a first transmission rate and a first Ethernet block stream with a second transmission rate, the plurality of first FlexE client block streams include a first FlexE client block stream with the first transmission rate and a first FlexE client block stream with the second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

Blocks in a FlexE block stream are mapped to different quantities of slots by using a FlexE time division multiplexing (time division multiplexing, TDM) feature, so that FlexE client block streams with a plurality of different rates can be output, and one optical module can be broken out into interfaces with a plurality of rates. This helps reduce use of interface boards of different rates, and reduce costs.

In some implementations, a transmission rate of each of the plurality of first Ethernet block streams is less than a transmission rate of the first FlexE block stream.

Because a higher-rate FlexE block stream is converted into a plurality of lower-rate Ethernet block streams, a breakout optical module is implemented, to help interconnection between the optical module and a plurality of remote devices.

In some implementations, the plurality of optical interfaces are further configured to receive a plurality of second optical signals from the optical fiber, where the plurality of second optical signals include a plurality of second Ethernet block streams. The optoelectrical conversion device is further configured to perform optical-to-electrical conversion on the plurality of second optical signals, to obtain a plurality of electrical signals, where the plurality of electrical signals include the plurality of second Ethernet block streams. The processing circuit is further configured to obtain a second FlexE block stream based on the plurality of second Ethernet block streams. The FlexE interface is further configured to send the second FlexE block stream to the network device through the FlexE channel.

A plurality of line-side Ethernet block streams are converted into a FlexE block stream by using a characteristic of FlexE channelization, and then an electrical signal generated by optical-to-electrical conversion is sent, so that a plurality of optical interfaces interconnected to a plurality of remote devices can be mapped to one interface of an optical module interconnected to a network device. Therefore, a requirement of communication between the plurality of remote devices and the network device through the optical module can be satisfied.

In some implementations, the processing circuit includes a FlexE shim circuit and a transcoding circuit. The transcoding circuit is configured to convert an encoding format of a block in the plurality of second Ethernet block streams from the Ethernet encoding format into the FlexE encoding format, to obtain a plurality of second FlexE client block streams. The FlexE shim circuit is configured to obtain the second FlexE block stream based on the plurality of second FlexE client block streams.

In some scenarios, a block in the FlexE encoding format and a block in the Ethernet encoding format have different encoding formats. Because the transcoding circuit converts the encoding format of the block from the Ethernet encoding format into the FlexE encoding format, the optical interface adapts to a standard Ethernet interface (for example, an Ethernet interface that complies with the IEEE 802.3 standard). This reduces complexity of decoding a block by the network device.

In some implementations, the optical module includes an interface chip, and the FlexE interface and the processing circuit are both disposed in the interface chip.

The FlexE interface and the processing circuit are integrated into a same interface chip, so that a layout of the optical module is simplified, and an overall size of the optical module is reduced.

According to a second aspect, an optical module is provided, including: a housing, provided with an electrical interface and a plurality of optical interfaces, where the electrical interface is connected to a network device outside the optical module, and the plurality of optical interfaces are connected to an optical fiber outside the optical module; an interface chip, disposed in the housing, where the interface chip includes a flexible Ethernet FlexE interface, a processing circuit, and a plurality of Ethernet interfaces, the FlexE interface is opposite to the electrical interface, the processing circuit is disposed between the FlexE interface and the plurality of Ethernet interfaces, the processing circuit is configured to: convert a FlexE block stream received by the FlexE interface into a plurality of Ethernet block streams, and output the plurality of Ethernet block streams to the plurality of Ethernet interfaces, and the plurality of Ethernet interfaces are in one-to-one correspondence with the plurality of optical interfaces; and an optoelectrical conversion device, disposed in the housing, where one end of the optoelectrical conversion device is electrically connected to the plurality of Ethernet interfaces of the interface chip, and the other end of the optoelectrical conversion device is opposite to the plurality of optical interfaces.

According to a second aspect, the optical module with the FlexE interface is provided. One FlexE interface is mapped to a plurality of Ethernet interfaces, and the plurality of Ethernet interfaces are mapped to a plurality of optical interfaces. Therefore, density of optical interfaces is improved, to help implement high-density breakout of optical interfaces.

In some implementations, the processing circuit includes a FlexE shim circuit and a transcoding circuit. The FlexE shim circuit is configured to obtain a plurality of first FlexE client block streams based on a first FlexE block stream, where the plurality of first FlexE client block streams include a block in a FlexE encoding format. The transcoding circuit is configured to convert an encoding format of a block in the plurality of first FlexE client block streams from the FlexE encoding format into an Ethernet encoding format, to obtain a plurality of first Ethernet block streams.

In some implementations, the FlexE shim circuit is configured to perform slot mapping on the first FlexE block stream based on slot configuration information, to obtain the plurality of first FlexE client block streams. The slot configuration information indicates at least one of a quantity of slots occupied by the plurality of first FlexE client block streams or slot positions occupied by the plurality of first FlexE client block streams.

In some implementations, the plurality of first Ethernet block streams include a first Ethernet block stream with a first transmission rate and a first Ethernet block stream with a second transmission rate, the plurality of first FlexE client block streams include a first FlexE client block stream with the first transmission rate and a first FlexE client block stream with the second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

In some implementations, a transmission rate of each of the plurality of first Ethernet block streams is less than a transmission rate of the first FlexE block stream.

In some implementations, the plurality of optical interfaces are further configured to receive a plurality of second optical signals from the optical fiber, where the plurality of second optical signals include a plurality of second Ethernet block streams. The optoelectrical conversion device is further configured to perform optical-to-electrical conversion on the plurality of second optical signals, to obtain a plurality of electrical signals, where the plurality of electrical signals include the plurality of second Ethernet block streams. The processing circuit is further configured to obtain a second FlexE block stream based on the plurality of second Ethernet block streams. The FlexE interface is further configured to send the second FlexE block stream to the network device through a FlexE channel.

In some implementations, the processing circuit includes a FlexE shim circuit and a transcoding circuit. The transcoding circuit is configured to convert an encoding format of a block in the plurality of second Ethernet block streams from the Ethernet encoding format into the FlexE encoding format, to obtain a plurality of second FlexE client block streams. The FlexE shim circuit is configured to obtain the second FlexE block stream based on the plurality of second FlexE client block streams.

In some implementations, the optical module includes an interface chip, and the FlexE interface and the processing circuit are both disposed in the interface chip.

According to a third aspect, a network device is provided, including a processor, a first flexible Ethernet FlexE interface, and an optical module. The optical module includes a second FlexE interface, a processing circuit, an optoelectrical conversion device, and a plurality of optical interfaces, and the first FlexE interface is communicatively connected to the second FlexE interface through a FlexE channel. The processor is configured to generate a first FlexE block stream. The first FlexE interface is configured to send the first FlexE block stream to the second FlexE interface through the FlexE channel. The processing circuit is configured to obtain a plurality of first Ethernet block streams based on the first FlexE block stream. The optoelectrical conversion device is configured to perform electrical-to-optical conversion on the plurality of first Ethernet block streams, to obtain a plurality of first optical signals. The plurality of optical interfaces are configured to send the plurality of first optical signals to an optical fiber.

In the network device provided in the third aspect, the optical module with the FlexE interface is disposed, converts a system-side FlexE block stream into a plurality of Ethernet block streams by using a characteristic of FlexE channelization, and sends an optical signal generated by electrical-to-optical conversion, so that one interface (the FlexE interface) that is of the optical module and that is interconnected with the network device is mapped to the plurality of optical interfaces. Therefore, density of optical interfaces is improved, to help implement high-density breakout of optical interfaces.

In addition, the network device can be connected to a plurality of remote devices through the optical module, to improve an interface capability and scalability of the network device, and help support a more complex network topology structure.

In some implementations, the processing circuit includes a FlexE shim circuit and a transcoding circuit. The FlexE shim circuit is configured to obtain a plurality of first FlexE client block streams based on the first FlexE block stream, where the plurality of first FlexE client block streams include a block in a FlexE encoding format. The transcoding circuit is configured to convert an encoding format of a block in the plurality of first FlexE client block streams from the FlexE encoding format into an Ethernet encoding format, to obtain the plurality of first Ethernet block streams.

In some implementations, the FlexE shim circuit is configured to perform slot mapping on the first FlexE block stream based on slot configuration information, to obtain the plurality of first FlexE client block streams. The slot configuration information indicates at least one of a quantity of slots occupied by the plurality of first FlexE client block streams or slot positions occupied by the plurality of first FlexE client block streams.

In some implementations, the plurality of first Ethernet block streams include a first Ethernet block stream with a first transmission rate and a first Ethernet block stream with a second transmission rate, the plurality of first FlexE client block streams include a first FlexE client block stream with the first transmission rate and a first FlexE client block stream with the second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

In some implementations, a transmission rate of each of the plurality of first Ethernet block streams is less than a transmission rate of the first FlexE block stream.

In some implementations, the plurality of optical interfaces are further configured to receive a plurality of second optical signals from the optical fiber, where the plurality of second optical signals include a plurality of second Ethernet block streams. The optoelectrical conversion device is further configured to perform optical-to-electrical conversion on the plurality of second optical signals, to obtain a plurality of electrical signals, where the plurality of electrical signals include the plurality of second Ethernet block streams. The processing circuit is further configured to obtain a second FlexE block stream based on the plurality of second Ethernet block streams. The second FlexE interface is further configured to send the second FlexE block stream to the network device through the FlexE channel.

In some implementations, the processing circuit includes a FlexE shim circuit and a transcoding circuit. The transcoding circuit is configured to convert an encoding format of a block in the plurality of second Ethernet block streams from the Ethernet encoding format into the FlexE encoding format, to obtain a plurality of second FlexE client block streams. The FlexE shim circuit is configured to obtain the second FlexE block stream based on the plurality of second FlexE client block streams.

In some implementations, the optical module includes an interface chip, and the second FlexE interface and the processing circuit are both disposed in the interface chip.

According to a fourth aspect, a data transmission method is provided, applied to an optical module, including: receiving a first flexible Ethernet FlexE block stream from a first network device through a FlexE channel, where the optical module is communicatively connected to the first network device through the FlexE channel; obtaining a plurality of first Ethernet block streams based on the first FlexE block stream; performing electrical-to-optical conversion on the plurality of first Ethernet block streams, to obtain a plurality of first optical signals; and sending the plurality of first optical signals to a second network device through an optical fiber.

In some implementations, obtaining the plurality of first Ethernet block streams based on the first FlexE block stream includes: obtaining a plurality of first FlexE client block streams based on the first FlexE block stream, where the plurality of first FlexE client block streams include a block in a FlexE encoding format; and converting an encoding format of a block in the plurality of first FlexE client block streams from the FlexE encoding format into an Ethernet encoding format, to obtain the plurality of first Ethernet block streams.

In some implementations, obtaining the plurality of first FlexE client block streams based on the first FlexE block stream includes: performing slot mapping on the first FlexE block stream based on slot configuration information, to obtain the plurality of first FlexE client block streams, where the slot configuration information indicates at least one of a quantity of slots occupied by the plurality of first FlexE client block streams or slot positions occupied by the plurality of first FlexE client block streams.

In some implementations, the plurality of first FlexE client block streams include a first FlexE client block stream with a first transmission rate and a first FlexE client block stream with a second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

In some implementations, a transmission rate of each of the plurality of first Ethernet block streams is less than a transmission rate of the first FlexE block stream.

In some implementations, the method further includes: receiving a plurality of second optical signals from the second network device, where the plurality of second optical signals include a plurality of second Ethernet block streams; performing optical-to-electrical conversion on the plurality of second optical signals, to obtain a plurality of electrical signals, where the plurality of electrical signals include the plurality of second Ethernet block streams; obtaining a second FlexE block stream based on the plurality of second Ethernet block streams; and sending the second FlexE block stream to the first network device through the FlexE channel.

In some implementations, obtaining the second FlexE block stream based on the plurality of second Ethernet block streams includes: converting an encoding format of a block in the plurality of second Ethernet block streams from the Ethernet encoding format into the FlexE encoding format, to obtain a plurality of second FlexE client block streams; and obtaining the second FlexE block stream based on the plurality of second FlexE client block streams.

### BRIEF DESCRIPTION OF DRAWINGS

FIG. 1 is a diagram of a panel of a board using a QSFP28 10×10G breakout optical module according to an embodiment of this application;
FIG. 2 is a diagram of a panel of a board using an SFP+ 10×10G breakout optical module according to an embodiment of this application;
FIG. 3 is a diagram of an architecture of a network device according to an embodiment of this application;
FIG. 4 is a diagram of an internal structure of a processing circuit in FIG. 3;
FIG. 5 is a diagram of a FlexE encoding format according to an embodiment of this application;
FIG. 6 is a diagram of an Ethernet encoding format according to an embodiment of this application;
FIG. 7 is a diagram of an architecture of another network device according to an embodiment of this application;
FIG. 8 is a diagram of an architecture of an interface chip in an optical module in FIG. 7;
FIG. 9 is a diagram of an architecture of another network device according to an embodiment of this application;
FIG. 10 is a diagram of a structure of an interface chip in an optical module in FIG. 9;
FIG. 11 is a diagram of an architecture of another network device according to an embodiment of this application;
FIG. 12 is a flowchart of a data transmission method according to an embodiment of this application;
FIG. 13 is a flowchart of a data transmission method according to an embodiment of this application; and
FIG. 14 is a diagram of a structure of an interface chip in an optical module in FIG. 11.

### DESCRIPTION OF EMBODIMENTS

To make the objectives, technical solutions, and advantages of this application clearer, the following further describes the implementations of this application in detail with reference to the accompanying drawings.

The following describes an application scenario of embodiments of this application by using an example.

Embodiments of this application may be applied to a scenario in which a network device communicates with another network device based on a high-density breakout optical module. The network device may be a network device such as a switch, a router, or a firewall. The network device may alternatively be a part of a component on a network device, for example, a single board (including a main control board, an interface board, or a line card) on the network device. The network device may alternatively be a functional module on a network device, or may be a media access control (media access control, MAC) chip, a network processor (network processor, NP), or a central processing unit (central processing unit, CPU), or the like that supports flexible Ethernet (flexible Ethernet, FlexE). The network device may alternatively be a compute device such as a server or a terminal. Embodiments of this application are described mainly by using an example in which the network device is a board, for example, in a scenario in which the board communicates with a high-density breakout optical module disposed on the board.

The optical module is an electronic component configured to implement an optical-to-electrical conversion function and/or an electrical-to-optical conversion function in optical fiber communication. The optical module mainly includes an electrical interface, an optoelectrical conversion device, a functional circuit, and an optical interface.

The electrical interface is connected to a network device outside of the optical module. The electrical interface is configured to transmit an electrical signal, and the electrical interface may also be referred to as a system-side interface or an electrical signal interface. The electrical interface is, for example, a serializer/deserializer (serializer/deserializer, SerDes) interface. The electrical interface includes one or more pairs of serialized lanes (lane), each pair of lanes include one receive lane and one transmit lane, and each pair of lanes include one SerDes for sending and one SerDes for receiving.

The optical interface is connected to an optical fiber. The optical interface is configured to transmit an optical signal. The optical interface may also be referred to as a line-side interface or an optical signal interface of the optical module. The optical interface may be an Ethernet interface, and an optical signal transmitted by the optical interface is used to carry a block stream (referred to as an Ethernet block stream for short) that complies with an Ethernet protocol standard (for example, the IEEE 802.3 standard).

A breakout optical module is an optical module, and a main function of the breakout optical module is to break out a higher-rate electrical interface into a plurality of lower-rate optical interfaces. For example, the breakout optical module converts, into a plurality of lower-rate optical signals, a group of higher-rate electrical signals received from the electrical interface, and sends the plurality of lower-rate optical signals through the optical interface. The breakout optical module provides the plurality of optical interfaces, or supports output of a plurality of optical signals. This helps improve interface capabilities to some extent. The optical interface of the breakout optical module is usually an optical interface provided by a multi-fiber push on (multi-fiber push on, MPO) connector. The MPO connector is in a multi-core optical fiber structure. For example, an MPO connector has 12 fiber cores, to support transmission and reception of 12 pairs of optical signals.

Currently, the breakout optical module is usually straight-through. That is, a quantity of channels for transmission of an optical signal between the breakout optical module and the optical fiber (referred to as line-side channels for short) is the same as a quantity of channels for transmission of an electrical signal between the breakout optical module and the network device (referred to as system-side channels for short). For example, the quantity of line-side channels of the breakout optical module is the same as a quantity of SerDes lanes. In other words, a quantity of optical signals transmitted by the breakout optical module is the same as a quantity of electrical signals, and there is a one-to-one correspondence between the optical signals and the electrical signals.

However, when the straight-through breakout optical module is used, because the quantity of line-side channels is the same as the quantity of system-side channels, density of optical interfaces is excessively low. Consequently, a quantity of remote network devices that can be connected to the breakout optical module is small, an interface capability of the network device is affected, and application is limited to some extent. In addition, a transmission rate of a system-side channel of the breakout optical module needs to be reduced to a transmission rate of a line-side channel. Consequently, a bandwidth resource of the system-side interface cannot be fully used, and a bandwidth resource of the system-side interface is lost.

For example, a typical breakout optical module includes a 40G QSFP+ SR4 optical module or a 100G QSFP28 SR4 optical module. The 40G QSFP+ SR4 optical module and the 100G QSFP28 SR4 optical module each have four pairs of serdes lanes, and each have four system-side lanes and four line-side lanes. Basic principles of the 40G QSFP+ SR4 optical module and the 100G QSFP28 SR4 optical module are as follows: Four received electrical signals undergo signal drive, and then converted into four parallel optical signals by an optoelectrical conversion device. A manner of sending an electrical signal is similar. The 40G QSFP+ SR4 optical module supports breakout into four Ethernet interfaces with a rate of 10G. That is, the 40G QSFP+ SR4 optical module supports transmission of four optical signals, and each optical signal carries one Ethernet block stream with a rate of 10G. The 100G QSFP28 SR4 optical module supports breakout into four Ethernet interfaces with a rate of 25G. The 100G QSFP28 SR4 optical module can transmit four optical signals, and each optical signal carries one Ethernet block stream with a rate of 25G.

To improve density of optical interfaces of the breakout optical module, in an implementation, a multi-link Gearbox (multi-link Gearbox, MLG) chip is added in the breakout optical module. The MLG chip is mainly used for signal rate conversion and lane mapping. In an example, the MLG chip distributes data in units of bits. For example, a corresponding output lane is allocated to each bit in a data stream, and data carried in the bit is sent through the output lane corresponding to the bit. For example, an optical module including the MLG chip is a 100G SR10 optical module, an electrical interface of the 100G SR10 optical module is an interface with a rate of 100G, the electrical interface supports transmission of four Ethernet block streams with a rate of 25G, and an optical interface supports transmission of 10 Ethernet block streams with a rate of 10G. When receiving a data stream with a rate of 100G from the electrical interface, the MLG chip in the 100G SR10 optical module sends the 1^{st} bit in the data stream to the 1^{st} output channel, and sends the 2^{nd} bit in the data stream to the 2^{nd} output channel, and so on. This is equivalent to dividing the entire data stream with the rate of 100G into 10 parts, and distributing bits in the data stream cyclically to 10 output channels. For details about the implementation of the MLG, refer to the descriptions in the OIF-MLG-03.0 standard.

However, if the MLG chip is added to the breakout optical module to improve the optical interface density, a chip interconnected with the optical module on a board is required to support an MLG function. If the chip interconnected with the optical module on the board does not support the MLG function, the MLG chip does not support a MAC port. Therefore, conversion into 10 MAC layer data streams with a rate of 10G needs to rely on an external MAC chip or a MAC circuit in an NP. As a result, the MLG chip and the MAC chip need to be separately added on the board, resulting in high board costs and high PCB layout pressure.

Based on this, embodiments of this application provide a FlexE-based breakout optical module. The breakout optical module includes a FlexE interface. An interface chip in the breakout optical module supports FlexE. The interface chip in the breakout optical module maps an Ethernet interface to a FlexE slot or maps a FlexE slot to an Ethernet interface by using a characteristic of FlexE channelization, so that a quantity of line-side channels of the breakout optical module is greater than a quantity of system-side channels. This helps implement high-density breakout of optical interfaces of 10G, 25G, 50G, or the like, and improves density of optical interfaces of the optical module.

In a possible implementation, the interface chip distributes a received FlexE block stream to a plurality of FlexE subchannels. For example, a chip on a board generates a FlexE block stream, and the FlexE block stream includes a series of 64B/66B blocks in a FlexE encoding format. The chip on the board sends the FlexE block stream to the breakout optical module. After the interface chip in the breakout optical module receives the FlexE block stream, the interface chip distributes data in units of 64B/66B blocks. For example, the interface chip sequentially distributes 64B/66B blocks in the FlexE block stream to a plurality of FlexE subchannels, to generate a plurality of FlexE client (client) block streams. Each FlexE client block stream includes a part of 64B/66B blocks in the FlexE block stream. After converting an encoding format of a block in the plurality of FlexE client block streams into an Ethernet encoding format, the interface chip generates a plurality of Ethernet block streams. After optical-to-electrical conversion is performed on the plurality of Ethernet block streams, a plurality of optical signals are generated, and the plurality of optical signals are sent to an optical fiber outside the optical module through optical interfaces of the breakout optical module.

A FlexE channel is equivalent to a system-side channel of the interface chip in the optical module. The FlexE channel may be located between the optical module and a MAC chip that is on the board and that is interconnected with the optical module. One end of the FlexE channel may be a FlexE group (FlexE group) interface of the interface chip, and the other end of the FlexE channel may be a FlexE group interface of the MAC chip that is on the board and that is interconnected with the interface chip. The FlexE channel may be used to transmit a FlexE block stream between the interface chip and the board. A transmission rate of the FlexE channel is greater than a transmission rate of the FlexE subchannel. The 64B/66B block means that the block includes 66 bits, the first two bits of the 66 bits are synchronization bits, and the last 64 bits are data bits.

A FlexE subchannel is equivalent to a line-side channel of the interface chip. The FlexE subchannel may be implemented by using a FlexE shim (shim) in the interface chip. The FlexE subchannel may be located between a FlexE shim circuit in the interface chip and a remote device that is connected to an optical interface of the optical module through an optical fiber. One end of the FlexE subchannel may be the FlexE shim circuit in the interface chip, and one end of the FlexE subchannel may be a remote device connected to an optical interface of the optical module. A quantity of FlexE subchannels is greater than a quantity of FlexE channels. Each FlexE subchannel carries one FlexE client block stream.

The interface chip distributes blocks in a FlexE block stream to corresponding FlexE subchannels, so that a plurality of lower-rate block streams (FlexE client block streams) are generated based on one higher-rate block stream (FlexE block stream) input from the electrical interface, and the plurality of lower-rate block streams (FlexE client block streams) are output through the optical interfaces. In this way, a quantity of line-side channels is greater than a quantity of system-side channels, to improve density of optical interfaces, and help support breakout of high-density optical interfaces. In addition, the interface chip has a similar function to the MLG chip. In addition, the chip interconnected with the breakout optical module on the board does not need to support MLG. This reduces dependency on the MLG chip to some extent. Because the MLG chip does not need to be deployed on the board, PCB layout complexity, power consumption, and costs on the board caused by the deployment of the MLG chip are reduced, so that the implementation solution is simpler, and the costs and power consumption are reduced.

For example, a transmission rate of a FlexE channel is 100G, and the FlexE shim circuit in the interface chip sequentially distributes a FlexE block stream received from the FlexE channel cyclically to two FlexE subchannels, so that a transmission rate of each FlexE subchannel is 50G, or two FlexE client block streams with a rate of 50G are generated. In an example, the interface chip distributes the 1^{st} block in the block stream received from the FlexE channel to the 1^{st} FlexE subchannel, distributes the 2^{nd} block in the block stream received from the FlexE channel to the 2^{nd} FlexE subchannel, distributes the 3^{rd} block in the block stream received from the FlexE channel to the 1^{st} FlexE subchannel, distributes the 4^{th} block received from the FlexE channel to the 2^{nd} FlexE subchannel, and so on. The interface chip converts one received FlexE block stream with a rate of 100G into two FlexE client block streams with a rate of 50G.

For another example, a transmission rate of the FlexE channel is 100G, and the FlexE shim circuit in the interface chip sequentially distributes a block stream received from the FlexE channel cyclically to four FlexE subchannels, so that a transmission rate of each FlexE subchannel is 25G, or four FlexE client block streams with a rate of 25G are generated. In an example, the interface chip distributes the 1^{st} block in the block stream received from the FlexE channel to the 1^{st} FlexE subchannel, the interface chip distributes the 2^{nd} block received from the FlexE channel to the 2^{nd} FlexE subchannel, distributes the 3^{rd} block received from the FlexE channel to the 3^{rd} FlexE subchannel, distributes the 4^{th} block received from the FlexE channel to the 4^{th} FlexE subchannel, distributes the 5^{th} block in the block stream received from the FlexE channel is distributed to the 1^{st} FlexE subchannel, distributes the 6^{th} block in the block stream received from the FlexE channel to the 2^{nd} FlexE subchannel, and so on. The interface chip converts one received FlexE block stream with a rate of 100G into four FlexE client block streams with a rate of 25G.

For another example, a transmission rate of the FlexE channel is 100G, and the FlexE shim circuit in the interface chip sequentially distributes a block stream received from the FlexE channel cyclically to 10 FlexE subchannels, so that a transmission rate of each FlexE subchannel is 10G, or 10 FlexE client block streams with a rate of 10G are generated. In an example, the interface chip distributes the 1^{st} block in the block stream received from the FlexE channel to the 1^{st} FlexE subchannel, distributes the 2^{nd} block received from the FlexE channel to the 2^{nd} FlexE subchannel, distributes the 3^{rd} block received from the FlexE channel to the 3^{rd} FlexE subchannel, distributes the 4^{th} block received from the FlexE channel to the 4^{th} FlexE subchannel, distributes the 5^{th} block in the block stream received from the FlexE channel to the 5^{th} FlexE subchannel, distributes the 6^{th} block in the block stream received from the FlexE channel to the 6^{th} FlexE subchannel, distributes the 7^{th} block received from the FlexE channel to the 7^{th} FlexE subchannel, distributes the 8^{th} block received from the FlexE channel to the 8^{th} FlexE subchannel, distributes the 9^{th} block received from the FlexE channel to the 9^{th} FlexE subchannel, distributes the 10^{th} block in the block stream received from the FlexE channel to the 10^{th} FlexE subchannel, distributes the 11^{th} block in the block stream received from the FlexE channel to the 1^{st} FlexE subchannel, distributes the 12^{th} block in the block stream received from the FlexE channel to the 2^{nd} FlexE subchannel, and so on, to convert one FlexE block stream with a rate of 100G received by the electrical interface of the optical module into 10 FlexE client block streams with a rate of 10G.

The FlexE subchannels may be obtained by further dividing the FlexE channel based on a time division multiplexing (time division multiplexing, TDM) mechanism. In an example, a period of time is divided into a plurality of slots, each FlexE subchannel occupies one or more slots, and different FlexE subchannels occupy different slots. The interface chip may send each block received from the FlexE channel in a period of time to an optical port by using a corresponding slot. For example, a transmission rate of the FlexE channel is 100G, a period of time is divided into 20 slots, and a bandwidth corresponding to one slot is 5G. The FlexE shim circuit of the interface chip may allocate, at a granularity of 5G or a multiple of 5G, a bandwidth occupied by one FlexE client block stream. The FlexE shim circuit in the interface chip groups every 20 64B/66B blocks in the received FlexE block stream into one group, maps the 20 64B/66B blocks to a slot 0 to a slot 19 respectively, and sequentially distributes the 20 64B/66B blocks by using the slot 0 to the slot 19. This process is repeated and finally the FlexE subchannels are formed.

In a possible implementation, the FlexE shim circuit in the interface chip performs slot mapping on an input FlexE block stream based on slot configuration information, to output a FlexE client block stream with a specified rate. The slot configuration information includes at least one of a quantity of slots occupied by one or more FlexE client block streams or slot positions occupied by one or more FlexE client block streams. For example, a bandwidth corresponding to one slot is 5G, and the slot configuration information indicates that a FlexE client block stream occupies two slots. The FlexE shim circuit selects any two slots from the slot 0 to the slot 19 as slots occupied by one FlexE client block stream, and maps the FlexE client block stream to the two slots, so that a rate of the output FlexE client block stream is 5G×2=10G. For another example, the slot configuration information indicates that a FlexE client block stream occupies five slots. The FlexE shim circuit selects any five slots from the slot 0 to the slot 19 as slots occupied by one FlexE client block stream, and maps the FlexE client block stream to the five slots, so that a rate of the output FlexE client block stream is 5G×5=25G.

In a possible implementation, the FlexE shim circuit in the interface chip maps blocks in the FlexE block stream to different quantities of slots based on the slot configuration information, to support output of FlexE client block streams of a plurality of different rates. For example, the slot configuration information includes a first quantity of slots occupied by a first FlexE client block stream and a second quantity of slots occupied by a second FlexE client block stream. The FlexE shim circuit maps one part of blocks in the FlexE block stream to slots of the first quantity of slots based on the slot configuration information, to obtain the first FlexE client block stream with a first transmission rate. The FlexE shim circuit maps the other part of blocks in the FlexE block stream to slots of the second quantity of slots based on the slot configuration information, to obtain the first FlexE client block stream with a second transmission rate.

In an example scenario, some Ethernet network devices cannot provide more Ethernet interfaces because interface space of boards is limited. For example, when the Ethernet network device cannot provide 10G SFP+ interfaces at a higher density, the network device may use a QSFP28 100G FlexE interface (4×25G) to connect to an optical module of an encapsulation type QSFP28. The 100G QSFP28 optical module may use the method provided in embodiments of this application to break out one QSFP28 100G interface into 10 Ethernet interfaces with a rate of 10G, to form a QSFP28 10×10G breakout optical module. Density of 10G Ethernet interfaces is greatly improved. After the QSFP28 10×10G breakout optical module is mounted on an Ethernet network device, the QSFP28 10×10G breakout optical module can be connected to 10 10G SFP+ interfaces of remote devices, to increase a quantity of devices that can be connected to the Ethernet network device.

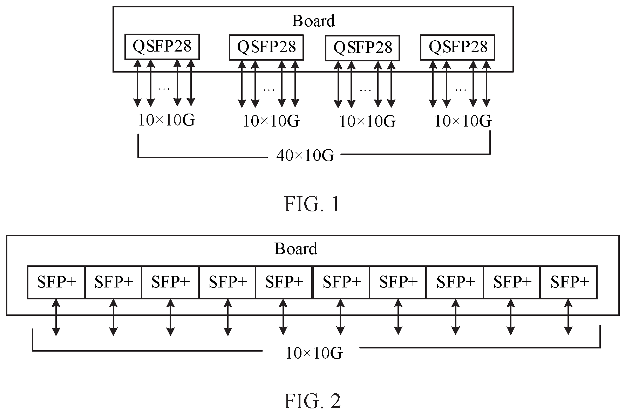

For example, FIG. 1 is a diagram of a panel of a board using a QSFP28 10×10G breakout optical module according to an embodiment of this application. The board shown in FIG. 1 includes four QSFP28 100G interfaces, each QSFP28 100G interface may be connected to one QSFP28 10×10G breakout optical module provided in embodiments of this application, and each QSFP28 10×10G breakout optical module can be broken out into 10 Ethernet interfaces with a rate of 10G. The four QSFP28 10×10G breakout optical modules provide 40 10G Ethernet interfaces (represented as 40×10G in the figure) in total, so that the board can provide 40 Ethernet interfaces with a rate of 10G in total. FIG. 2 is a diagram of a panel of another board according to an embodiment of this application. The board shown in FIG. 2 includes 10 SFP+ interfaces with a rate of 10G. An Ethernet interface with a rate of 10G that is broken out from the QSFP28 100G interface in FIG. 2 can be connected to an SFP+ interface with a rate of 10G in FIG. 2.

In another example scenario, a system-side interface of the optical module is an interface with a rate of 200G, a physical interface corresponding to the system-side interface includes four pairs of serializer/deserializer lanes (serdes lane), and a rate of each pair of serdes lanes is 53G. If a straight-through breakout optical module is used, to enable the breakout optical module to communicate with a 10G Ethernet interface of a remote device, a transmission rate of each pair of serdes lanes in the breakout optical module needs to be reduced from 53 to 10. Therefore, four Ethernet interfaces with a rate of 10 are provided. Consequently, a system-side bandwidth cannot be fully used, and a quantity of provided Ethernet interfaces is excessively small. However, the optical module provided in embodiments of this application is used, so that the optical module can break out a system-side interface with a rate of 200G into eight Ethernet interfaces with a rate of 25G. Therefore, a quantity of optical interfaces is increased without reducing a system-side bandwidth.

In another example scenario, a system-side interface with a rate of 400G (a physical interface includes four pairs of serdes lanes, and a rate of each pair of serdes lanes is 112G) may be broken out into eight optical interfaces with a rate of 50G.

In conclusion, in the foregoing scenarios, in a scenario in which a transmission rate of the system-side interface of the optical module is high and a quantity of serdes lanes in the system-side interface is small, if a common breakout optical module is used, only a serdes rate can be reduced for use, but a quantity of optical interfaces cannot be increased. However, according to the method provided in embodiments of this application, a quantity of optical interfaces can be increased as much as possible without reducing the system-side bandwidth. For example, when a common breakout optical module is used for a 100G interface, rates of four pairs of 25G system-side serdes lanes can only be reduced from 25 to 10, to obtain four 10G interfaces through breakout. According to the method provided in embodiments, 10 10G interfaces can be broken out.

Optionally, the FlexE interface of the optical module and the processing circuit of the optical module are both disposed in the interface chip. The FlexE interface and the processing circuit are integrated into a same chip. Alternatively, the FlexE interface and the processing circuit are separately disposed in different chips.

In some embodiments, the optical module may be deployed outside a network device. For example, the optical module includes a housing, where the housing is provided with an electrical interface and a plurality of optical interfaces, and the electrical interface is connected to the network device outside the optical module; an interface chip, disposed in the housing, where the interface chip includes a FlexE interface, a processing circuit, and a plurality of Ethernet interfaces, the FlexE interface is opposite to the electrical interface, the processing circuit is configured to: convert a FlexE block stream received by the FlexE interface into a plurality of Ethernet block streams, and output the plurality of Ethernet block streams to the plurality of Ethernet interfaces, and the plurality of Ethernet interfaces are in one-to-one correspondence with the plurality of optical interfaces; and an optoelectrical conversion device, disposed in the housing, where one end of the optoelectrical conversion device is electrically connected to the plurality of Ethernet interfaces of the interface chip, and the other end of the optoelectrical conversion device is opposite to the plurality of optical interfaces. In some embodiments, the optical module is deployed in the network device.

The following further describes, with reference to four instances, the optical module, the network device including the optical module, and an optical module-based data transmission method provided in embodiments of this application.

### Instance 1

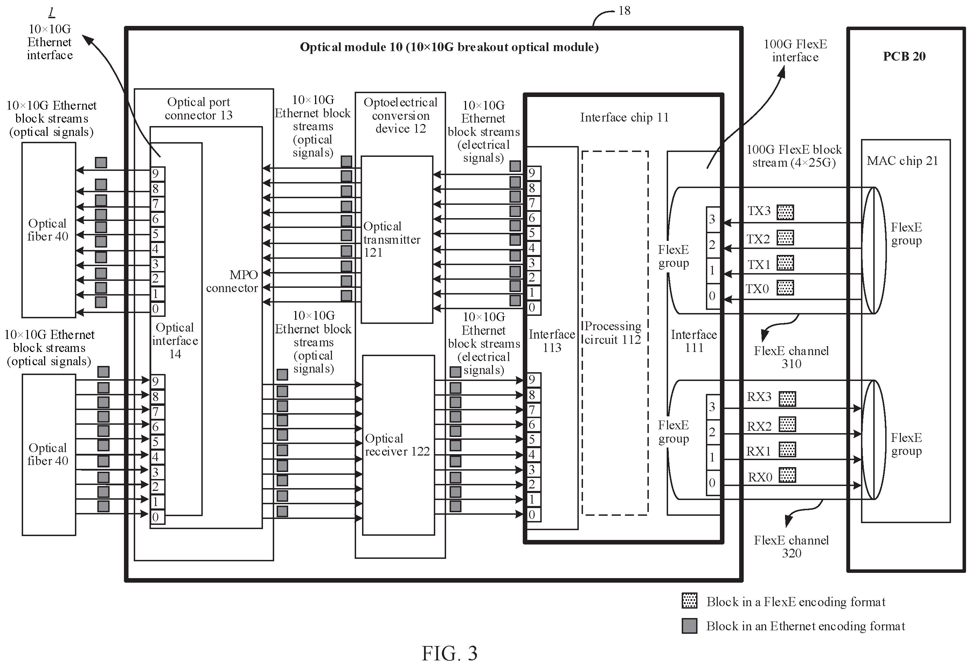

FIG. 3 is a diagram of an architecture of a network device 1 according to an embodiment of this application. The network device 1 shown in FIG. 3 includes an optical module 10 and a PCB 20.

The optical module 10 shown in FIG. 3 is a 10×10G breakout optical module. The optical module 10 shown in FIG. 3 supports breakout of a system-side FlexE interface with a rate of 100G into 10 line-side Ethernet interfaces with a rate of 10G. The system-side FlexE interface with a rate of 100G may be implemented by using four serdes lanes with a transmission rate of 25G. The optical module 10 shown in FIG. 3 can convert the four system-side serdes lanes with a transmission rate of 25G into 10 line-side Ethernet channels with a rate of 10G.

The optical module 10 may be a quad small form-factor pluggable 28 (Quad Small Form-factor Pluggable 28, QSFP28) optical module. The optical module 10 includes a housing 18, an interface chip 11, an optoelectrical conversion device 12, and an optical port connector 13. The optical port connector 13 includes an optical interface 14. The interface chip 11, the optoelectrical conversion device 12, and the optical port connector 13 are disposed in the housing 18. The interface chip 11 and the optoelectrical conversion device 12 are disposed in the housing 18 of the optical module 10. The interface chip 11, the optoelectrical conversion device 12, and the optical port connector 13 are sequentially connected in series. In a possible implementation, the interface chip 11, the optoelectrical conversion device 12, the optical port connector 13, and the optical interface 14 are connected to each other through an internal path (for example, a bus, an optical fiber, or another type of signal line) of the optical module 10.

The interface chip 11 includes a system-side interface 111, a processing circuit 112, and a line-side interface 113. The system-side interface 111, the processing circuit 112, and the line-side interface 113 are sequentially connected in series.

The system-side interface 111 is communicatively connected to a MAC chip 21 on the PCB 20. The system-side interface 111 includes one or more FlexE interfaces. The system-side interface 111 may include a 100G FlexE interface, and the system-side interface 111 is configured to transmit a FlexE block stream with a rate of 100G between the optical module 10 and the PCB 20. In a possible implementation, the interface chip 11 configures a working mode of the system-side interface 111 to a FlexE mode, so that the system-side interface 111 implements a function of the FlexE interface. The system-side interface 111 is connected to the MAC chip 21 through a FlexE channel 310. The system-side interface 111 may be an electrical signal interface. In other words, the system-side interface 111 is configured to transmit a FlexE block stream between the processing circuit 112 and the MAC chip 21 in a form of an electrical signal. The system-side interface 111 may include a plurality of physical interfaces. Each physical interface in the system-side interface 111 may be connected to the MAC chip 21 through a signal line. For example, the system-side interface 111 includes a 4-lane serdes interface. The 4-lane serdes interface is connected to the PCB 20 through four pairs of differential signal lines. The four pairs of differential signal lines are used to transmit four pairs of electrical signals. Each pair of differential signal lines includes two signal lines, one signal line is used to receive one electrical signal, and the other signal line is used to send one electrical signal. Refer to FIG. 3. The system-side interface 111 includes an interface 0, an interface 1, an interface 2, and an interface 3 in a transmit direction and an interface 0, an interface 1, an interface 2, and an interface 3 in a receive direction. The interface 0 in the transmit direction and the interface 0 in the receive direction are serdes interfaces of a first pair of lanes, and the interface 1 in the transmit direction and the interface 1 in the receive direction are serdes interfaces of a second pair of lanes. A receive interface and a transmit interface in the system-side interface 111 may be implemented by using a same physical interface, or a receive interface and a transmit interface in the system-side interface 111 may be implemented by using different physical interfaces. The system-side interface 111 may include one or more FlexE group interfaces. For example, the interface chip 11 adds the interface 0, the interface 1, the interface 2, and the interface 3 to a same FlexE group. Based on a bonding feature of FlexE, the interface 0, the interface 1, the interface 2, and the interface 3 collaborate to implement one FlexE group interface.

The processing circuit 112 is configured to implement conversion between a FlexE block stream and an Ethernet block stream. For example, the processing circuit 112 is configured to implement conversion between a FlexE block stream with a rate of 100G and 10 Ethernet block streams with a rate of 10G. In a process in which the PCB 20 sends a signal to the optical module 10, the processing circuit 112 is configured to convert a received FlexE block stream with a rate of 100G into 10 Ethernet block streams with a rate of 10G, to break out a FlexE interface with a rate of 100G into 10 Ethernet interfaces with a rate of 10G. In a possible implementation, the processing circuit 112 is configured to sequentially distribute, based on a FlexE shim slot mapping mechanism, blocks in the FlexE block stream with a rate of 100G cyclically to 10 slots, to generate 10 Ethernet block streams with a rate of 10G. In a process in which a remote device sends a signal to the optical module 10 through an optical fiber 40, the processing circuit 112 is configured to convert 10 received Ethernet block streams with a rate of 10G into a FlexE block stream with a rate of 100G. The processing circuit 112 may include an integrated circuit or a microprocessor configured to implement conversion between a FlexE block stream and an Ethernet block stream. For example, the processing circuit 112 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The line-side interface 113 is communicatively connected to the optoelectrical conversion device 12. The line-side interface 113 includes one or more Ethernet interfaces. The line-side interface 113 is configured to transmit an Ethernet block stream between the optoelectrical conversion device 12 and the processing circuit 112. For example, the line-side interface 113 is a 10×10G Ethernet interface. The line-side interface 113 is configured to transmit 10 Ethernet block streams with a rate of 10G. For example, the line-side interface 113 includes an interface 0, an interface 1, and an interface 2 to an interface 9 in a transmit direction and an interface 0, an interface 1, and an interface 2 to an interface 9 in a receive direction. The interface 0 is configured to transmit the 1^{st} Ethernet block stream with a rate of 10G. The interface 1 is configured to transmit the 2^{nd} Ethernet block stream with a rate of 10G. The interface 1 is configured to transmit the 2^{nd} Ethernet block stream with a rate of 10G. By analogy, the interface 9 is configured to transmit the 9^{th} Ethernet block stream with a rate of 10G. The line-side interface 113 may be an electrical signal interface. In other words, the line-side interface 113 is configured to transmit an Ethernet block stream between the processing circuit 112 and the optoelectrical conversion device 12 in a form of an electrical signal. A receive interface and a transmit interface in the line-side interface 113 may be implemented by using a same physical interface, or a receive interface and a transmit interface in the line-side interface 113 may be implemented by using different physical interfaces.

The optoelectrical conversion device 12 includes an optical transmitter 121 and an optical receiver 122. One end of the optical transmitter 121 is connected to the line-side interface 113 of the interface chip 11, and the other end of the optical transmitter 121 is connected to the optical port connector 13. The optical transmitter 121 is configured to convert an electrical signal from the interface chip 11 into an optical signal, and send the optical signal to the optical port connector 13. Specifically, the optical transmitter 121 receives 10 electrical signals from the line-side interface 113 of the interface chip 11, and each of the 10 electrical signals includes one Ethernet block stream with a rate of 10G. The optical transmitter 121 converts the 10 electrical signals into 10 optical signals, and each of the 10 optical signals includes one Ethernet block stream with a rate of 10G. The optical transmitter 121 sends the 10 optical signals to the optical port connector 13. The optical transmitter 121 may include an optical source circuit. The optical source circuit 1213 is a circuit element capable of generating an optical signal, such as a laser diode (LD) or a light emitting diode (LED). The optical source circuit 1213 is configured to generate the 10 optical signals based on the 10 electrical signals.

The optical receiver 122 is configured to convert an optical signal from the optical port connector 13 into an electrical signal, and send the electrical signal to the interface chip 11. For example, the optical receiver 122 receives the 10 optical signals from the optical port connector 13, and each of the 10 optical signals includes one Ethernet block stream with a rate of 10G. The optical receiver 122 converts the 10 optical signals into 10 electrical signals, and each of the 10 electrical signals includes one Ethernet block stream with a rate of 10G. The optical receiver 122 sends the 10 electrical signals to the line-side interface 113 of the interface chip 11. The optical receiver 122 may include an optoelectrical detection circuit. The optoelectrical detection circuit is, for example, a photosensitive detector (such as a photodiode or a photodiode array) and a related circuit. The optoelectrical detection circuit is configured to convert the 10 optical signals into the 10 electrical signals, and the electrical signals are, for example, current signals or voltage signals.

The optical port connector 13 is also referred to as an optical fiber interface connector, that is, an optical fiber connector connected to the optical module. The optical port connector 13 is connected to the optical fiber 40. The optical port connector 13 is configured to transmit an optical signal between the optical fiber 40 and the optoelectrical conversion device 12. One end of the optical port connector 13 is connected to the optoelectrical conversion device 12. The other end of the optical port connector 13 is connected to the optical fiber 40. The optical port connector 13 includes a plurality of optical interfaces 14. For example, the plurality of optical interfaces 14 include 10 optical interfaces: an optical interface 0 and an optical interface 1 to an optical interface 9 in a transmit direction and 10 optical interfaces: an optical interface 0 and an optical interface 1 to an optical interface 9 in a receive direction. The optical interface 0 is configured to transmit the 1^{st} optical signal between the optical fiber 40 and the optoelectrical conversion device 12. The optical interface 1 is configured to transmit the 2^{nd} optical signal between the optical fiber 40 and the optoelectrical conversion device 12. By analogy, the optical interface 9 is configured to transmit the 10^{th} optical signal between the optical fiber 40 and the optoelectrical conversion device 12. The optical port connector 13 is, for example, an MPO connector.

The PCB 20 is configured to generate four electrical signals, and the four electrical signals carry a 100G FlexE block stream. The PCB 20 transmits the four electrical signals to the optical module 10. For example, the PCB 20 is a main control board. For another example, the PCB 20 is an interface board. For still another example, the PCB 20 is a circuit board on which a processor is located. For example, the PCB 20 is a circuit board on which an NP or a CPU is located. The PCB 20 includes the MAC chip 21.

The FlexE channel 310 is a FlexE channel in a transmit direction (from the PCB 20 to the optical module 10). The FlexE channel 310 is configured to transmit a FlexE block stream that is transmitted from the PCB 20 to the optical fiber 40 through the optical module 10. The FlexE channel 310 includes a FlexE interface located in the optical module 10 and a FlexE interface located in the PCB 20. In an example, the FlexE channel 310 includes a FlexE interface located in the interface chip 11 and a FlexE interface located in the MAC chip 21. For example, the FlexE channel 310 includes four physical interfaces: an interface 0, an interface 1, an interface 2, and an interface 3 that are located in the interface chip 11, and each of the four physical interfaces is configured to receive one FlexE block stream with a rate of 25G from the PCB 20. The FlexE channel 310 may be a FlexE group channel. The FlexE channel 310 includes a FlexE group interface located in the interface chip 11 and a FlexE group interface located in the MAC chip 21.

A FlexE channel 320 is a FlexE channel in a receive direction (from the optical module 10 to the PCB 20). The FlexE channel 320 is configured to transmit a FlexE block stream that is transmitted from the optical fiber 40 to the PCB 20 through the optical module 10. The FlexE channel 320 includes four physical interfaces: an interface 0, an interface 1, an interface 2, and an interface 3 that are located in the interface chip 11, and each of the four physical interfaces is configured to send one FlexE block stream with a rate of 25G to the PCB 20. The FlexE channel 320 may be a FlexE group channel. The FlexE channel 320 includes a FlexE group interface located in the interface chip 11 and a FlexE group interface located in the MAC chip 21.

In a process in which the PCB 20 sends a signal to the optical module 10, the MAC chip 21 generates four electrical signals. The four electrical signals are used to carry a FlexE block stream with a rate of 100G, and each of the four electrical signals carries a FlexE block stream with a rate of 25G, that is, a 4×25G FlexE block stream. The MAC chip 21 sends the four electrical signals to the system-side interface 111 of the interface chip 11 in the optical module 10. The system-side interface 111 of the interface chip 11 receives the four electrical signals from the MAC chip 21 through the FlexE channel 310. The system-side interface 111 of the interface chip 11 sends, to the processing circuit 112 in the interface chip 11, the four electrical signals that carry the FlexE block stream with a rate of 100G. For example, refer to FIG. 3. In the transmit (Transmit, TX) direction, the system-side interface 111 includes four FlexE interfaces: the interface 0, the interface 1, the interface 2, and the interface 3. The interface 0 in the system-side interface 111 receives the 1^{st} electrical signal (TX0) from the PCB 20, and the 1^{st} electrical signal (TX0) includes a FlexE block stream with a rate of 25G. The interface 0 sends the 1^{st} electrical signal to the processing circuit 112. The interface 1 in the system-side interface 111 receives the 2^{nd} electrical signal (TX1) from the PCB 20, and the 2^{nd} electrical signal (TX1) includes a FlexE block stream with a rate of 25G. The interface 1 sends the 2^{nd} electrical signal to the processing circuit 112. The interface 2 in the system-side interface 111 receives the 3^{rd} electrical signal from the PCB 20, and the 3^{rd} electrical signal (TX3) includes a FlexE block stream with a rate of 25G. The interface 2 sends the 3^{rd} electrical signal to the processing circuit 112. The interface 3 in the system-side interface 111 receives the 4^{th} electrical signal (TX4) from the PCB 20, and the 4^{th} electrical signal (TX4) includes a FlexE block stream with a rate of 25G. The interface 3 sends the 4^{th} electrical signal to the processing circuit 112.

The processing circuit 112 obtains the FlexE block stream with a rate of 100G that is carried in the four electrical signals. The processing circuit 112 performs slot mapping based on the FlexE block stream with a rate of 100G, to obtain 10 Ethernet block streams. A transmission rate of each of the 10 Ethernet block streams is 10G. The processing circuit 112 obtains 10 electrical signals based on the 10 Ethernet block streams with a rate of 10G, and the processing circuit 112 sends the 10 electrical signals to the line-side interface 113 of the interface chip 11. Each electrical signal carries one Ethernet block stream with a rate of 10G. The line-side interface 113 of the interface chip 11 sends the 10 electrical signals to the optical transmitter 121. For example, refer to FIG. 3. In the TX direction, the line-side interface 113 of the interface chip 11 includes 10 Ethernet interfaces: the interface 0, the interface 1, and the interface 2 to the interface 9. The interface 0 in the line-side interface 113 sends, to the optical transmitter 121, the 1^{st} electrical signal that carries an Ethernet block stream with a rate of 10G. The interface 1 in the line-side interface 113 sends, to the optical transmitter 121, the 2^{nd} electrical signal that carries an Ethernet block stream with a rate of 10G. By analogy, the interface 9 in the line-side interface 113 sends, to the optical transmitter 121, the 10^{th} electrical signal that carries an Ethernet block stream with a rate of 10G.

The optical transmitter 121 receives the 10 electrical signals from the line-side interface 113. The optical transmitter 121 performs electrical-to-optical conversion on the 10 electrical signals to obtain 10 optical signals, and each of the 10 optical signals carries one Ethernet block stream with a rate of 10G. The optical transmitter 121 sends the 10 optical signals to the optical port connector 13. The optical port connector 13 sends the 10 optical signals to the optical fiber 40 through the optical interface 14. The optical fiber 40 sends the 10 optical signals to a remote device (the remote device is not shown in the figure).

In a process in which the remote device sends a signal to the optical module 10, the optical fiber 40 sends 10 optical signals to the optical interface 14, and each of the 10 optical signals carries one Ethernet block stream with a rate of 10G. The optical port connector 13 sends the 10 optical signals to the optical receiver 122. The optical receiver 122 receives the 10 optical signals, the optical receiver 122 performs optical-to-electrical conversion on the 10 optical signals to obtain 10 electrical signals, and each of the 10 electrical signals carries one Ethernet block stream with a rate of 10G. The optical receiver 122 sends the 10 electrical signals to the line-side interface 113 of the interface chip 11.

The line-side interface 113 of the interface chip 11 sends the 10 electrical signals to the processing circuit 112. For example, the line-side interface 113 includes the 10 Ethernet interfaces: the interface 0, the interface 1, and the interface 2 to the interface 9. The interface 0 in the line-side interface 113 sends, to the processing circuit 112, the 1^{st} electrical signal that carries an Ethernet block stream with a rate of 10G. The interface 1 in the line-side interface 113 sends, to the processing circuit 112, the 2^{nd} electrical signal that carries an Ethernet block stream with a rate of 10G. By analogy, the interface 9 in the line side interface 113 sends, to the processing circuit 112, the 10^{th} electrical signal that carries an Ethernet block stream with a rate of 10G.

The processing circuit 112 receives the 10 electrical signals, and obtains 10 Ethernet block streams with a rate of 10G that are carried in the 10 electrical signals. The processing circuit 112 performs slot mapping on the 10 Ethernet block streams with a rate of 10G, to obtain a FlexE block stream with a rate of 100G. The processing circuit 112 obtains four electrical signals based on the FlexE block stream with a rate of 100G. The four electrical signals are used to collectively carry the FlexE block stream with a rate of 100G, and each of the four electrical signals carries a FlexE block stream with a rate of 25G. The processing circuit 112 sends the four electrical signals to the system-side interface 111. The system-side interface 111 sends the four electrical signals to the MAC chip 21 through the FlexE channel 320. For example, refer to FIG. 3. In the receive (Receive, RX) direction, the system-side interface 111 includes the interface 0, the interface 1, the interface 2, and the interface 3. The interface 0 is configured to receive the 1^{st} electrical signal (RX0) from the processing circuit 112, and the interface 0 sends the received 1^{st} electrical signal (RX0) to the MAC chip 21. The 1^{st} electrical signal (RX0) includes a FlexE block stream with a rate of 25G. The interface 1 is configured to receive the 2^{nd} electrical signal (RX1) from the processing circuit 112, and the interface 1 sends the received 2^{nd} electrical signal (RX0) to the MAC chip 21. The 2^{nd} electrical signal (RX1) includes a FlexE block stream with a rate of 25G. The interface 2 is configured to receive the 3^{rd} electrical signal (RX2) from the processing circuit 112, and the interface 2 sends the received 3^{rd} electrical signal (RX2) to the MAC chip 21. The 3^{rd} electrical signal (RX2) includes a FlexE block stream (RX2) with a rate of 25G. The interface 3 is configured to receive the 4^{th} electrical signal (RX3) from the processing circuit 112, and the interface 3 sends the received 4^{th} electrical signal (RX3) to the MAC chip 21. The 4^{th} electrical signal (RX3) includes a FlexE block stream with a rate of 25G.

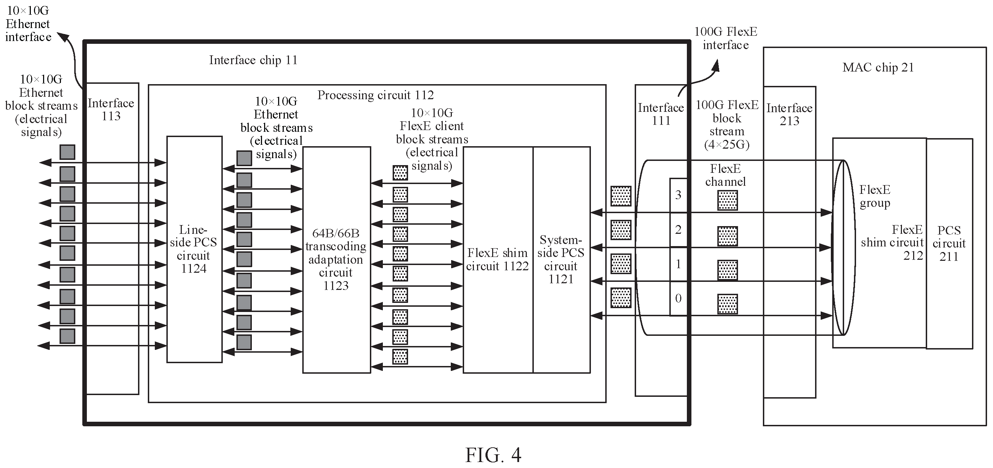

FIG. 4 is a diagram of an internal structure of the processing circuit 112 in FIG. 3. The processing circuit 112 includes a system-side PCS circuit 1121, a FlexE shim circuit 1122, a 64B/66B transcoding adaptation circuit 1123, and a line-side PCS circuit 1124. The system-side PCS circuit 1121, the FlexE shim circuit 1122, the 64B/66B transcoding adaptation circuit 1123, and the line-side PCS circuit 1124 are sequentially connected in series.

The system-side PCS circuit 1121 is configured to interconnect with a PCS circuit (not shown in the figure) in the MAC chip 21, and the system-side PCS circuit 1121 performs PCS layer processing on a received FlexE block stream.

The FlexE shim circuit 1122 is configured to perform slot mapping, to implement conversion between a FlexE block stream with a rate of 100G and 10 FlexE client block streams with a rate of 10G. The FlexE shim circuit 1122 logically divides a FlexE interface with a rate of 100G into 10 FlexE client interfaces, and a transmission rate of each FlexE client interface is 10G. For example, a bandwidth corresponding to one slot is 5G, and the FlexE shim circuit 1122 configures that each FlexE client block stream occupies two slots. In this way, the FlexE shim circuit 1122 increases a quantity of line-side channels, and almost does not lose system-side bandwidth resources.

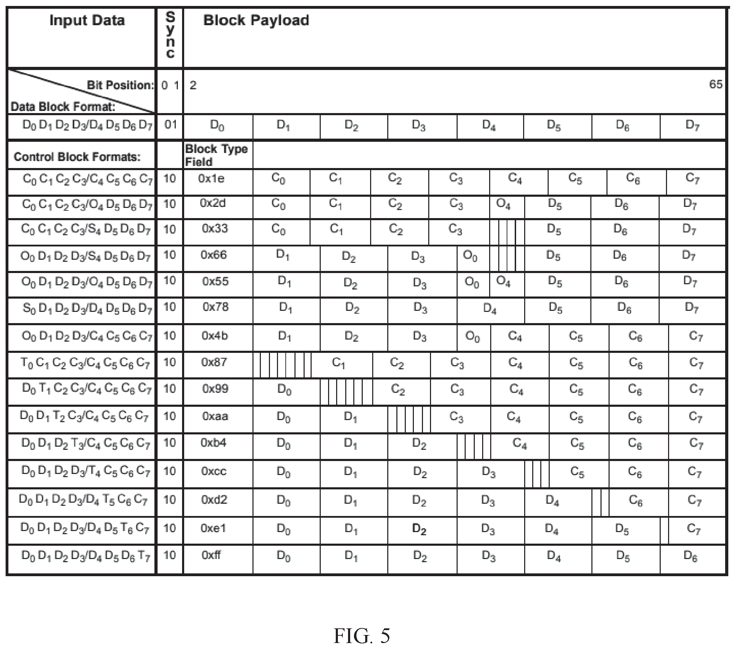

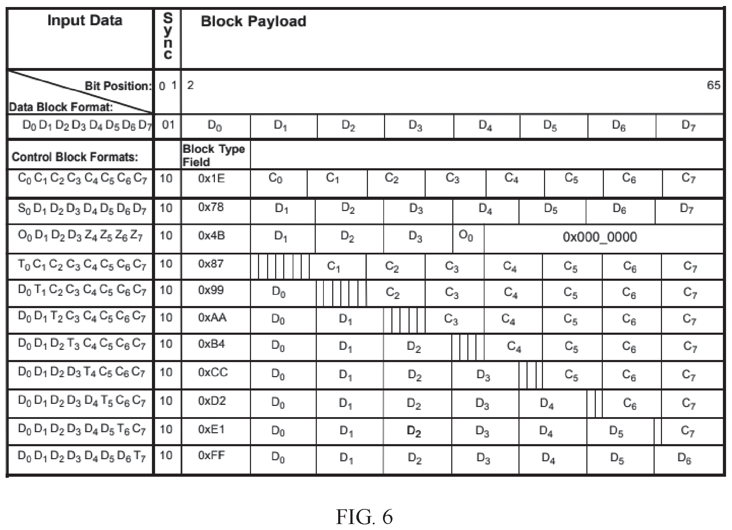

The 64B/66B transcoding adaptation circuit 1123 is configured to implement conversion between a block in a FlexE encoding format and a block in an Ethernet encoding format. For example, a block received by the FlexE interface complies with an encoding format defined by the 64B/66B blocks formats in IEEE 802.3 shown in FIG. 5. A 64B/66B encoding format of the 10G Ethernet interface 113 complies with the 64B/66B blocks formats in IEEE 802.3 shown in FIG. 6. The 64B/66B transcoding adaptation circuit 1123 in the interface chip is configured to implement conversion between the two encoding formats.

The line-side PCS circuit 1124 is configured to interconnect with a PCS circuit in the remote device, and the line-side PCS circuit 1124 performs PCS layer processing on a received FlexE block stream.

In a process in which the PCB 20 sends a signal to the optical module 10, the processing circuit 112 receives a FlexE block stream with a rate of 100G, and the system-side PCS circuit 1121 performs PCS layer processing on the FlexE block stream with a rate of 100G, and sends a processed FlexE block stream with a rate of 100G to the FlexE shim circuit 1122. When the FlexE shim circuit 1122 receives the FlexE block stream with a rate of 100G, the FlexE shim circuit 1122 performs slot mapping on the FlexE block stream with a rate of 100G, to generate 10 FlexE client block streams with a rate of 10G. The FlexE shim circuit 1122 sends the 10 FlexE client block streams with a rate of 10G to the 64B/66B transcoding adaptation circuit 1123. The 64B/66B transcoding adaptation circuit 1123 receives the 10 FlexE client block streams with a rate of 10G, and the 64B/66B transcoding adaptation circuit 1123 converts an encoding format of each block in each of the 10 FlexE client block streams with a rate of 10G from the FlexE encoding format shown in FIG. 5 into the Ethernet encoding format shown in FIG. 6, to obtain 10 Ethernet block streams with a rate of 10G. The 64B/66B transcoding adaptation circuit 1123 sends the 10 Ethernet block streams with a rate of 10G to the line-side PCS circuit 1124. The line-side PCS circuit 1124 performs PCS layer processing on the 10 Ethernet block streams with a rate of 10G, and then sends processed Ethernet block streams to the line-side interface 113. Based on this, the interface chip 11 breaks out one FlexE interface with a rate of 100G into 10 Ethernet interfaces with a rate of 10G, to improve density of line-side Ethernet interfaces.

In a process in which the optical module 10 sends a signal to the PCB 20, the processing circuit 112 receives 10 Ethernet block streams with a rate of 10G, and the line-side PCS circuit 1124 performs PCS layer processing on the 10 Ethernet block streams with a rate of 10G, and then sends processed Ethernet block streams to the 64B/66B transcoding and adaptation circuit 1123. The 64B/66B transcoding adaptation circuit 1123 converts an encoding format of each block in each of the 10 Ethernet block streams with a rate of 10G from the Ethernet encoding format shown in FIG. 6 into the FlexE encoding format shown in FIG. 5, to obtain 10 FlexE client block streams with a rate of 10G. The 64B/66B transcoding adaptation circuit 1123 sends the 10 10G FlexE client block streams to the system-side PCS circuit 1121. The system-side PCS circuit 1121 performs PCS layer processing on the 10 FlexE client block streams with a rate of 10G, and then sends processed FlexE client block streams to the system-side interface 111. Based on this, the interface chip 11 maps 10 Ethernet interfaces with a rate of 10G into one FlexE interface with a rate of 100G.

### Instance 2

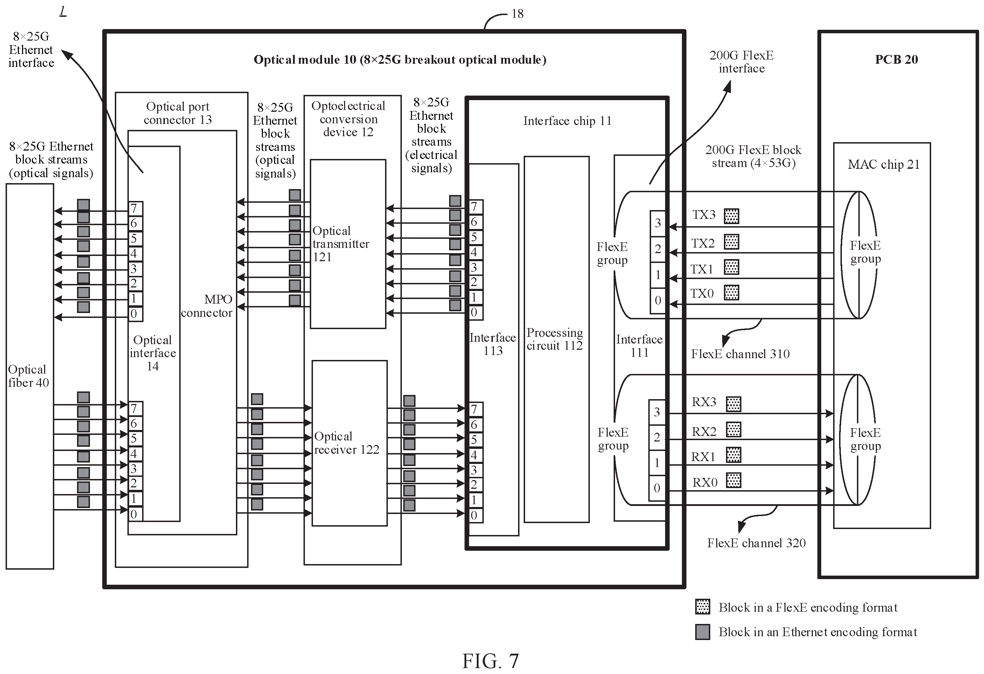

FIG. 7 is a diagram of an architecture of another network device 1 according to an embodiment of this application. An optical module 10 in the architecture shown in FIG. 7 is an 8×25G breakout optical module. The optical module 10 can break out a system-side FlexE interface with a rate of 200G into eight Ethernet interfaces with a rate of 25G. The system-side FlexE interface with a rate of 200G may be implemented by using four serdes lanes with a transmission rate of 53G. The optical module 10 shown in FIG. 3 can convert the four system-side serdes lanes with a transmission rate of 53G into eight line-side Ethernet channels with a rate of 25G.

A system-side interface 111 of the optical module 10 is a FlexE interface with a transmission rate of 200G. The system-side interface 111 is configured to send a FlexE block stream with a transmission rate of 200G between the optical module 10 and a MAC chip 21. A physical interface corresponding to the system-side interface 111 may be a 4-lane serdes interface. A line-side interface 113 of the optical module 10 is an 8×25G Ethernet interface, the line-side interface 113 is configured to transmit eight Ethernet block streams, and a transmission rate of each Ethernet block stream is 25G.

In a process in which a PCB 20 sends a signal to the optical module 10, the MAC chip 21 generates four electrical signals, and the four electrical signals are used to collectively carry a FlexE block stream with a rate of 200G. The four electrical signals each carry a FlexE block stream with a rate of 53G, that is, a 4×53G FlexE block stream. The system-side interface 111 receives the four electrical signals, and a processing circuit 112 obtains the FlexE block stream with a rate of 200G carried in the four electrical signals. The processing circuit 112 performs slot mapping on the FlexE block stream with a rate of 200G, to obtain eight Ethernet block streams. A rate of each of the eight Ethernet block streams is 25G. The processing circuit 112 sends eight electrical signals to the line-side interface 113, and each electrical signal carries one Ethernet block stream with a rate of 25G. The line-side interface 113 of an interface chip 11 sends the eight electrical signals to an optical transmitter 121. For example, refer to FIG. 7. In a TX direction, the line-side interface 113 of the interface chip 11 includes 10 Ethernet interfaces: an interface 0, an interface 1, and an interface 2 to an interface 7. The interface 0 in the line-side interface 113 sends, to the optical transmitter 121, the 1^{st} electrical signal that carries an Ethernet block stream with a rate of 25G. The interface 1 in the line-side interface 113 sends, to the optical transmitter 121, the 2^{nd} electrical signal that carries an Ethernet block stream with a rate of 25G. By analogy, the interface 7 in the line-side interface 113 sends, to the optical transmitter 121, the 8^{th} electrical signal that carries an Ethernet block stream with a rate of 25G. The optical transmitter 121 receives the eight electrical signals from the line-side interface 113. The optical transmitter 121 performs electrical-to-optical conversion on the eight electrical signals to obtain eight optical signals, and each of the eight optical signals carries one Ethernet block stream with a rate of 25G. The optical transmitter 121 sends the eight optical signals to an optical port connector 13. The optical port connector 13 sends the eight optical signals to an optical fiber 40 through an optical interface 14. The optical fiber 40 sends the eight optical signals to a remote device.

In a process in which the remote device sends a signal to the optical module 10, the optical fiber 40 sends eight optical signals to the optical interface 14, and each of the eight optical signals carries one Ethernet block stream with a rate of 25G. The optical port connector 13 sends the eight optical signals to an optical receiver 122. The optical receiver 122 receives the eight optical signals, the optical receiver 122 performs optical-to-electrical conversion on the eight optical signals, to obtain eight electrical signals, and each of the eight electrical signals carries one Ethernet block stream with a rate of 25G. The optical receiver 122 sends the eight electrical signals to the line-side interface 113 of the interface chip 11. The line-side interface 113 of the interface chip 11 sends the eight electrical signals to the processing circuit 112. For example, the line-side interface 113 includes the eight Ethernet interfaces: the interface 0, the interface 1, and the interface 2 to the interface 7. The interface 0 in the line-side interface 113 sends, to the processing circuit 112, the 1^{st} electrical signal that carries an Ethernet block stream with a rate of 25G. The interface 1 in the line-side interface 113 sends, to the processing circuit 112, the 2^{nd} electrical signal that carries an Ethernet block stream with a rate of 25G. By analogy, the interface 7 in the line side interface 113 sends, to the processing circuit 112, the 8^{th} electrical signal that carries an Ethernet block stream with a rate of 25G. The processing circuit 112 receives the eight electrical signals, and obtains the eight Ethernet block streams with a rate of 25G that are carried in the eight electrical signals. The processing circuit 112 performs slot mapping on the eight Ethernet block streams with a rate of 25G, to obtain a FlexE block stream with a rate of 200G. The processing circuit 112 obtains four electrical signals based on the FlexE block stream with a rate of 200G. The four electrical signals are collectively used to carry the FlexE block stream with a rate of 200G, and each of the four electrical signals carries a FlexE block stream with a rate of 53G. The processing circuit 112 sends the four electrical signals to the system-side interface 111. The system-side interface 111 sends the four electrical signals to the MAC chip 21 through a FlexE channel 320. For example, refer to FIG. 7. In an RX direction, the system-side interface 111 includes an interface 0, an interface 1, an interface 2, and an interface 3. The interface 0 is configured to receive the 1^{st} electrical signal (RX0) from the processing circuit 112, and the interface 0 sends the received 1^{st} electrical signal (RX0) to the MAC chip 21. The 1^{st} electrical signal (RX0) includes a FlexE block stream with a rate of 53G. The interface 1 is configured to receive the 2^{nd} electrical signal (RX1) from the processing circuit 112, and the interface 1 sends the received 2^{nd} electrical signal (RX0) to the MAC chip 21. The 2^{nd} electrical signal (RX1) includes a FlexE block stream with a rate of 53G. The interface 2 is configured to receive the 3^{rd} electrical signal (RX2) from the processing circuit 112, and the interface 2 sends the received 3^{rd} electrical signal (RX2) to the MAC chip 21. The 3^{rd} electrical signal (RX2) includes a FlexE block stream (RX2) with a rate of 53G. The interface 3 is configured to receive the 4^{th} electrical signal (RX3) from the processing circuit 112, and the interface 3 sends the received 4^{th} electrical signal (RX3) to the MAC chip 21. The 4^{th} electrical signal (RX3) includes a FlexE block stream with a rate of 53G.

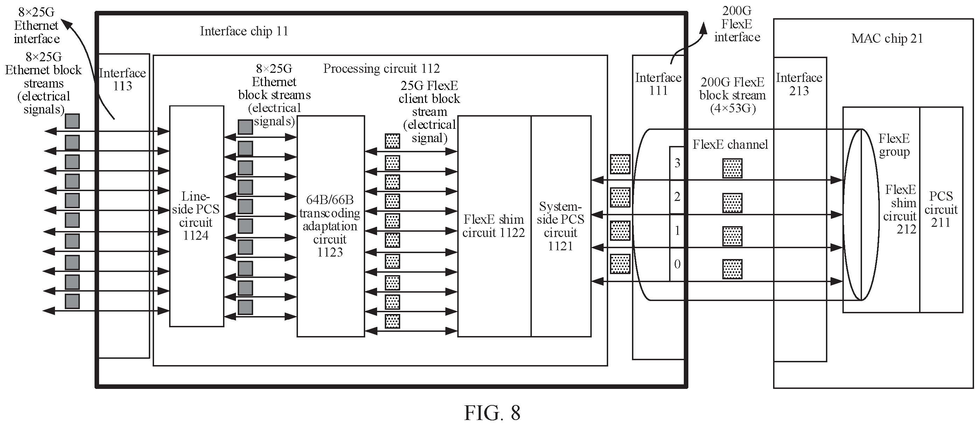

FIG. 8 is a diagram of a structure of the interface chip 11 in the optical module 10 in FIG. 7. As shown in FIG. 8, in a process in which the PCB 20 sends a signal to the optical module 10, the system-side interface 111 sends a FlexE block stream with a rate of 200G to a FlexE shim circuit 1122. The FlexE shim circuit 1122 converts the FlexE block stream with a rate of 200G into eight FlexE client block streams based on slot mapping. A transmission rate of each of the eight FlexE client block streams is 25G. The FlexE shim circuit 1122 logically divides a FlexE interface with a rate of 200G into eight FlexE client interfaces, and a transmission rate of each FlexE client interface is 25G. For example, a bandwidth corresponding to one slot is 5G, and the FlexE shim circuit 1122 configures that each FlexE client block stream occupies five slots. In this way, the FlexE shim circuit 1122 increases a quantity of line-side channels, and almost does not lose system-side bandwidth resources.

A 64B/66B transcoding adaptation circuit 1123 converts an encoding format of each block in each of the eight FlexE client block streams with a rate of 25G from the FlexE encoding format shown in FIG. 5 into the Ethernet encoding format shown in FIG. 6, to obtain eight Ethernet block streams. A rate of each Ethernet block stream is 25G. Based on this, the interface chip 11 breaks out one FlexE interface with a rate of 200G into eight Ethernet interfaces with a rate of 25G.

In a process in which the optical module 10 sends a signal to the PCB 20, the processing circuit 112 receives eight Ethernet block streams, and a rate of each of the eight Ethernet block streams is 25G. A line-side PCS circuit 1124 performs PCS layer processing on the eight Ethernet block streams with a rate of 25G, and then sends processed Ethernet block streams to the 64B/66B transcoding adaptation circuit 1123. The 64B/66B transcoding adaptation circuit 1123 converts an encoding format of each block in each of the eight Ethernet block streams with a rate of 25G from the Ethernet encoding format shown in FIG. 6 into the FlexE encoding format shown in FIG. 5, to obtain eight FlexE client block streams. A rate of each FlexE client block stream is 25G. The 64B/66B transcoding adaptation circuit 1123 sends the eight FlexE client block streams with a rate of 25G to the FlexE shim circuit 1122. The FlexE shim circuit 1122 converts the eight FlexE client block streams with a rate of 25G into one FlexE block stream with a rate of 200G based on slot mapping. A system-side PCS circuit 1121 performs PCS layer processing on the FlexE block stream with a rate of 200G, and then sends processed FlexE block stream to the system-side interface 111. Based on this, the interface chip 11 maps eight Ethernet interfaces with a rate of 25G into one FlexE interface with a rate of 200G.

### Instance 3

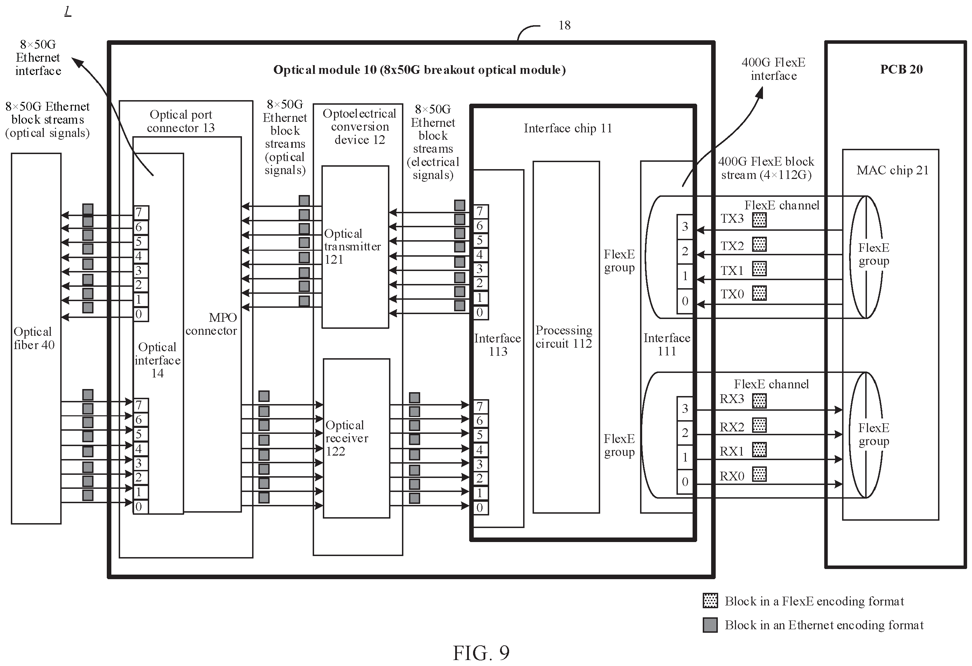

FIG. 9 is a diagram of an architecture of another network device 1 according to an embodiment of this application. An optical module 10 in the architecture shown in FIG. 9 is an 8×50G breakout optical module. The optical module 10 shown in FIG. 9 supports breakout of a system-side FlexE interface with a rate of 400G into eight line-side Ethernet interfaces with a rate of 50G. The system-side FlexE interface with a rate of 400G may be implemented by using four serdes lanes with a transmission rate of 112G. The optical module 10 shown in FIG. 3 can convert the four system-side serdes lanes with a transmission rate of 112G into eight line-side Ethernet channels with a rate of 50G.

A system-side interface 111 of the optical module 10 is a FlexE interface with a transmission rate of 400G. The system-side interface 111 is configured to send a FlexE block stream with a transmission rate of 400G between the optical module 10 and a MAC chip 21. A physical interface corresponding to the system-side interface 111 may be a 4-lane serdes interface. A line-side interface 113 of the optical module 10 is an 8×50G Ethernet interface, the line-side interface 113 is configured to transmit eight Ethernet block streams, and a transmission rate of each Ethernet block stream is 50G. A processing circuit 112 in an interface chip 11 in the optical module 10 in FIG. 9 converts a FlexE block stream with a rate of 400G into eight Ethernet block streams based on slot mapping, and a transmission rate of each Ethernet block stream is 50G, so that one FlexE interface with a rate of 400G is mapped to eight Ethernet interfaces with a rate of 50G.

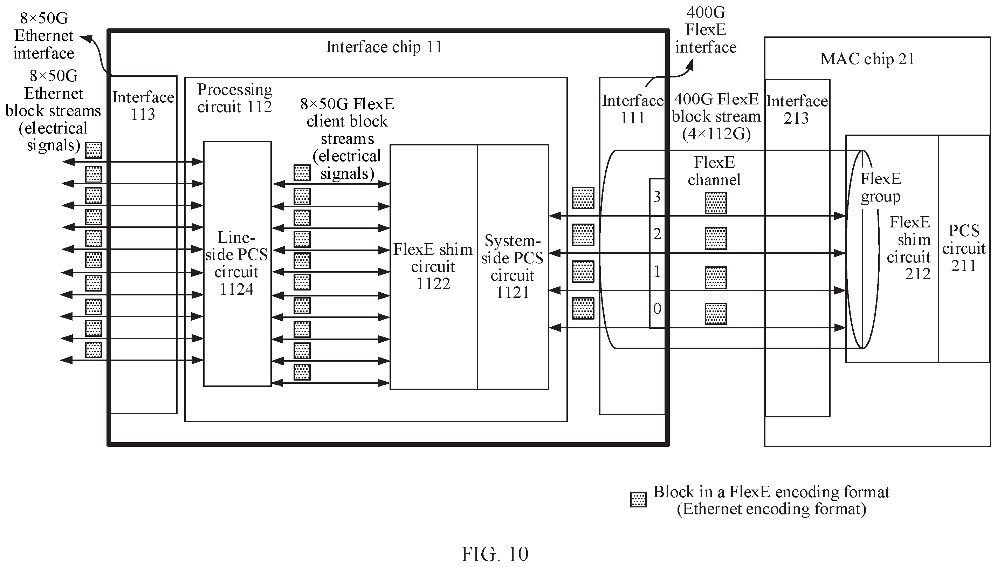

FIG. 10 is a diagram of a structure of the interface chip 11 in the optical module 10 in FIG. 9. As shown in FIG. 10, in a process in which the PCB 20 sends a signal to the optical module 10, the system-side interface 111 sends a FlexE block stream with a rate of 400G to a FlexE shim circuit 1122. The FlexE shim circuit 1122 converts the FlexE block stream with a rate of 400G into eight FlexE client block streams based on slot mapping. A transmission rate of each of the eight FlexE client block streams is 50G. Because an encoding format of a 64B/66B block in the Ethernet block stream with a rate of 50G is the same as a FlexE encoding format, a 64B/66B transcoding adaptation module does not need to be deployed in the interface chip 11.

### Instance 4

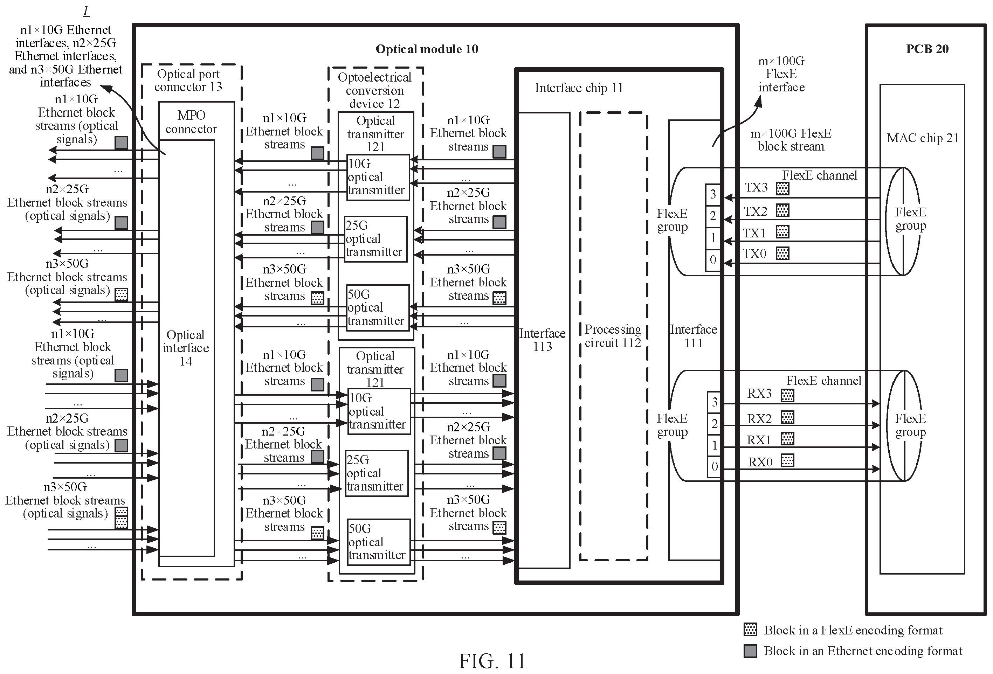

FIG. 11 is a diagram of an architecture of another network device 1 according to an embodiment of this application. An optical module 10 in the system architecture shown in FIG. 11 is a multi-rate breakout optical module. In Instance 4, the optical module 10 may break out one FlexE interface into Ethernet interfaces with a plurality of transmission rates by using a feature of flexible configurability of FlexE. In FIG. 11, an example in which the optical module 10 breaks out one FlexE interface with a rate of m×100G into n1 Ethernet interfaces with a rate of 10G, n2 Ethernet interfaces with a rate of 25G, and n3 Ethernet interfaces with a rate of 25G is used for description. In some other embodiments, the optical module 10 breaks out one FlexE interface into Ethernet interfaces with two rates or Ethernet interfaces with more than three rates.

For example, as shown in FIG. 11, a system-side interface 111 in the optical module 10 is a FlexE interface with a transmission rate of m×100G. The system-side interface 111 is configured to transmit a FlexE block stream with a rate of m×100G between the optical module 10 and a PCB 20, and is represented by an m×100G FlexE block stream in FIG. 11. m indicates a ratio of bandwidth occupied by the system-side interface 111 to 100G, that is, how many times of 100G bandwidth is occupied by the system-side interface 111, and m is a positive integer. For example, the system-side interface 111 is a FlexE interface with a rate of 100G, a FlexE interface with a rate of 200G, a FlexE interface with a rate of 400G, or a FlexE interface with a rate of 800G, and correspondingly, m is 1, 2, 4, or 8.

A line-side interface 113 in an interface chip 11 includes (n1+n2+n3) Ethernet interfaces, each of the n1 Ethernet interfaces is used for one Ethernet block stream with a rate of 10G, each of the n2 Ethernet interfaces is configured to transmit one Ethernet block stream with a rate of 25G, and each of the n3 Ethernet interfaces is configured to transmit one Ethernet block stream with a rate of 50G, where
n1 is a quantity of FlexE subchannels with a rate of 10G, n1 is also a quantity of FlexE client block streams with a rate of 10G, n1 is also a quantity of Ethernet interfaces with a rate of 10G that are broken out by the optical module, n1×10G indicates a total bandwidth occupied by Ethernet block streams with a rate of 10G, and n1 is 0 or a positive integer;
n2 is a quantity of FlexE subchannels with a rate of 25G, n2 is also a quantity of FlexE client block streams with a rate of 25G, n2 is also a quantity of Ethernet interfaces with a rate of 25G that are broken out by the optical module, n2×25G indicates a total bandwidth occupied by Ethernet block streams with a rate of 25G, and n2 is 0 or a positive integer; and
n3 is a quantity of FlexE subchannels with a rate of 50G, n3 is also a quantity of FlexE client block streams with a rate of 50G, n3 is also a quantity of Ethernet interfaces with a rate of 50G that are broken out by the optical module, n3×50G indicates a total bandwidth occupied by Ethernet block streams with a rate of 50G, and n3 is 0 or a positive integer.

A total bandwidth occupied by the line-side interface 113 is less than a total bandwidth occupied by the system-side interface 111. That is, n1×10G+n2×25G+n3×50G≤m×100G is satisfied. A sum of n1, n2, and n3 may be greater than m. That is, a quantity of line-side channels is greater than a quantity of system-side channels.

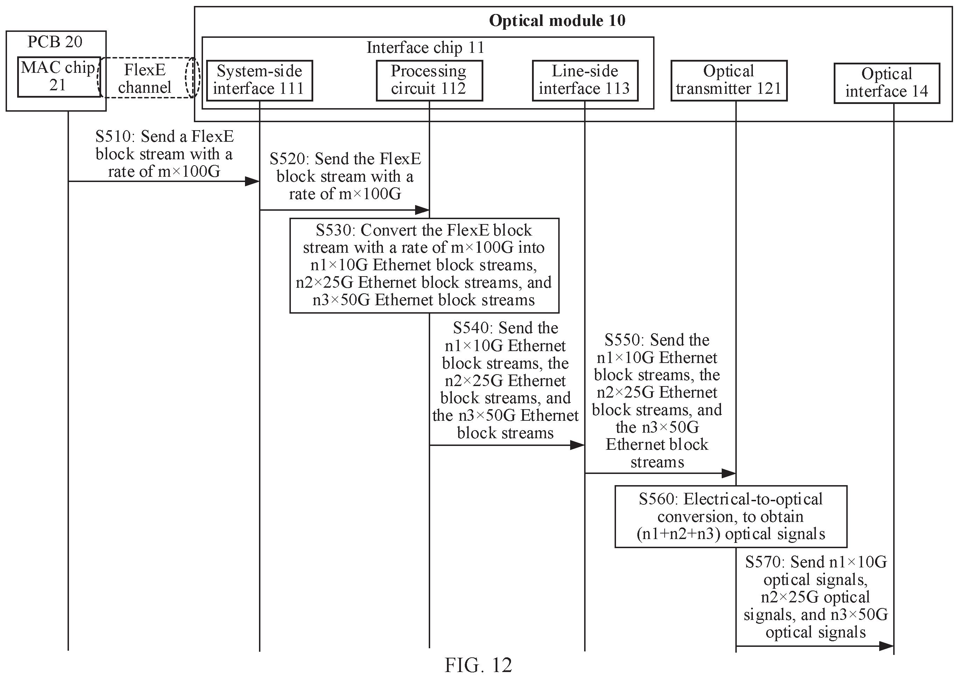

The following describes a process in which the PCB 20 sends data to the optical module 10 in FIG. 11 as an example. FIG. 12 is a flowchart of a data transmission method according to an embodiment of this application. The method shown in FIG. 12 is applied to the optical module 10 shown in FIG. 11. The method shown in FIG. 12 includes the following steps.

S510: A MAC chip 21 in the PCB 20 sends a FlexE block stream with a rate of m×100G to the system-side interface 111 in the interface chip 11 through a FlexE channel.

S520: The system-side interface 111 in the interface chip 11 receives, from the FlexE channel, the FlexE block stream with a rate of m×100G. The system-side interface 111 sends the m×100G FlexE block stream to a processing circuit 112 in the interface chip 11.

S530: The processing circuit 112 converts the FlexE block stream with a rate of m×100G into n1 Ethernet block streams with a rate of 10G, n2 Ethernet block streams with a rate of 25G, and n3 Ethernet block streams with a rate of 50G, to break out the system-side FlexE interface with a rate of m× 100G into the n1 Ethernet interfaces with a rate of 10G, the n2 Ethernet interfaces with a rate of 25G, and the n3 Ethernet interfaces with a rate of 50G on a line side.

S540: The processing circuit 112 sends, to the line-side interface 113 in the interface chip 11, the n1 Ethernet block streams with a rate of 10G, the n2 Ethernet block streams with a rate of 25G, and the n3 Ethernet block streams with a rate of 50G.

S550: The line-side interface 113 sends, to an optical transmitter 121, the n1 Ethernet block streams with a rate of 10G, the n2 Ethernet block streams with a rate of 25G, and the n3 Ethernet block streams with a rate of 50G.

S560: The optical transmitter 121 separately performs electrical-to-optical conversion on the n1 Ethernet block streams with a rate of 10G, the n2 Ethernet block streams with a rate of 25G, and the n3 Ethernet block streams with a rate of 50G, to obtain (n1+n2+n3) optical signals. The optical transmitter 121 sends the (n1+n2+n3) optical signals to an optical port connector 13.

In a possible implementation, S560 includes S5601 to S5603.

S5601: A 10G optical transmitter receives the n1 Ethernet block streams with a rate of 10G, and performs electrical-to-optical conversion on the n1 Ethernet block streams with a rate of 10G, to obtain n1 optical signals, where each of the n1 optical signals includes an Ethernet block stream with a rate of 10G. The 10G optical transmitter sends the n1 optical signals to the optical port connector 13.

S5602: A 25G optical transmitter receives the n2 Ethernet block streams with a rate of 25G, and performs electrical-to-optical conversion on the n2 Ethernet block streams with a rate of 25G, to obtain n2 optical signals, where each of the n2 optical signals includes an Ethernet block stream with a rate of 25G. The 25G optical transmitter sends the n2 optical signals to the optical port connector 13.

S5603: A 50G optical transmitter receives the n3 Ethernet block streams with a rate of 50G, and performs electrical-to-optical conversion on the n3 Ethernet block streams with a rate of 50G, to obtain n3 optical signals, where each of the n3 optical signals includes an Ethernet block stream with a rate of 50G. The 50G optical transmitter sends the n3 optical signals to the optical port connector 13.

S570: The optical port connector 13 receives the n1 optical signals that carry Ethernet block streams with a rate of 10G, the n2 optical signals that carry Ethernet block streams with a rate of 25G, and the n3 optical signals that carry Ethernet block streams with a rate of 50G. The optical port connector 13 sends, to an optical fiber 40 through an optical interface 14, the n1 optical signals that carry Ethernet block streams with a rate of 10G, the n2 optical signals that carry Ethernet block streams with a rate of 25G, and the n3 optical signals that carry Ethernet block streams with a rate of 50G.

According to the method provided in this embodiment, one optical module can be broken into interfaces with a plurality of rates by using a feature of flexible configurability of FlexE.

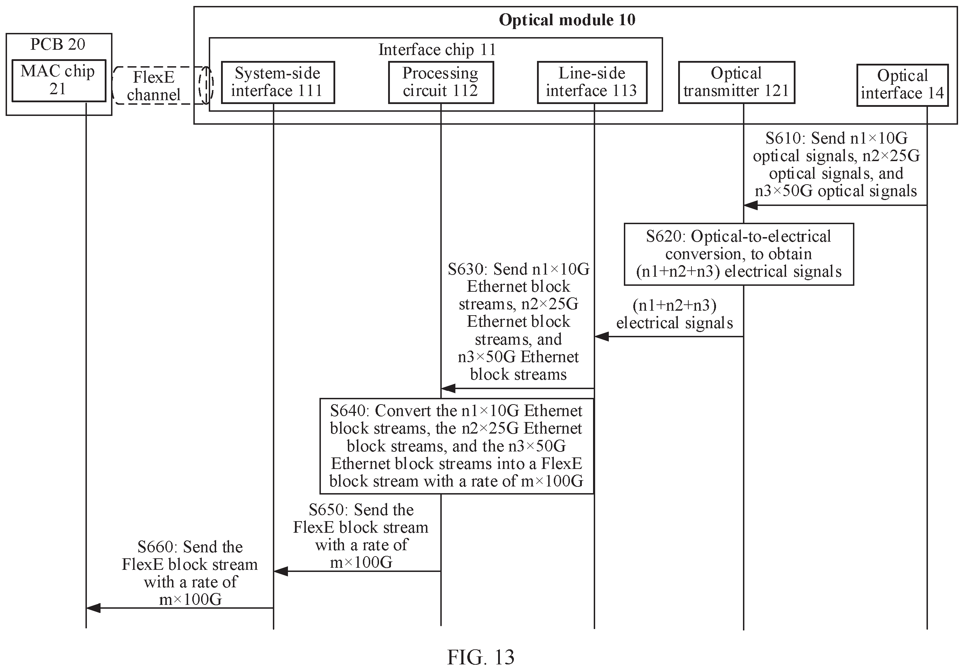

The following describes a process in which the optical module 10 sends data to the PCB 20 in FIG. 11 as an example. FIG. 13 is a flowchart of a data transmission method according to an embodiment of this application. The method shown in FIG. 13 is applied to the optical module 10 shown in FIG. 11. The method shown in FIG. 13 includes the following steps.

S610: An optical interface 14 of an optical port connector 13 receives n1 optical signals that carry Ethernet block streams with a rate of 10G, n2 optical signals that carry Ethernet block streams with a rate of 25G, and n3 optical signals that carry Ethernet block streams with a rate of 50G. The optical port connector 13 sends, to an optical receiver 122, the n1 optical signals that carry Ethernet block streams with a rate of 10G, the n2 optical signals that carry Ethernet block streams with a rate of 25G, and the n3 optical signals that carry Ethernet block streams with a rate of 50G.

S620: The optical receiver 122 performs optical-to-electrical conversion on the n1 optical signals that carry Ethernet block streams with a rate of 10G, the n2 optical signals that carry Ethernet block streams with a rate of 25G, and the n3 optical signals that carry Ethernet block streams with a rate of 50G, to obtain (n1+n2+n3) electrical signals.

In a possible implementation, step S620 includes step S6201 to step S6203.

S6201: A 10G optical receiver receives the n1 optical signals that carry Ethernet block streams with a rate of 10G, and the 10G optical receiver performs optical-to-electrical conversion on the n1 optical signals to obtain n1 electrical signals, where each of the n1 electrical signals includes an Ethernet block stream with a rate of 10G. The 10G optical receiver sends the n1 electrical signals to the Ethernet interfaces with a rate of 10G in the line-side interface 113 in the interface chip 11.

S6202: A 25G optical receiver receives the n2 optical signals that carry Ethernet block streams with a rate of 25G, and performs optical-to-electrical conversion on the n2 optical signals to obtain n2 electrical signals, where each of the n2 electrical signals includes an Ethernet block stream with a rate of 25G. The 25G optical receiver sends the n2 electrical signals to the Ethernet interfaces with a rate of 25G in the line-side interface 113 in the interface chip 11.

S6203: A 50G optical receiver receives the n3 optical signals that carry Ethernet block streams with a rate of 50G, and performs optical-to-electrical conversion on the n3 optical signals to obtain n3 electrical signals, where each of the n3 electrical signals includes an Ethernet block stream with a rate of 50G. The 50G optical receiver sends the n3 electrical signals to the Ethernet interfaces with a rate of 50G in the line-side interface 113 in the interface chip 11.

S630: The line-side interface 113 sends, to a processing circuit 112 in a form of electrical signals, the n1 Ethernet block streams with a rate of 10G, the n2 Ethernet block streams with a rate of 25G, and the n3 Ethernet block streams with a rate of 50G.

S640: The processing circuit 112 converts the n1 Ethernet block streams with a rate of 10G, the n2 Ethernet block streams with a rate of 25G, and the n3 Ethernet block streams with a rate of 50G into a FlexE block stream with a rate of m×100G, to convert the n1 Ethernet interfaces with a rate of 10G, the n2 Ethernet interfaces with a rate of 25G, and the n3 Ethernet interfaces with a rate of 50G on a line side into the system-side FlexE interface with a rate of m×100G.

S650: The processing circuit 112 sends the FlexE block stream with a rate of m×100G to the system-side interface 111 in the interface chip 11.

S660: The system-side interface 111 sends the FlexE block stream with a rate of m×100G to a MAC chip 21 in the PCB 20 through a FlexE channel.

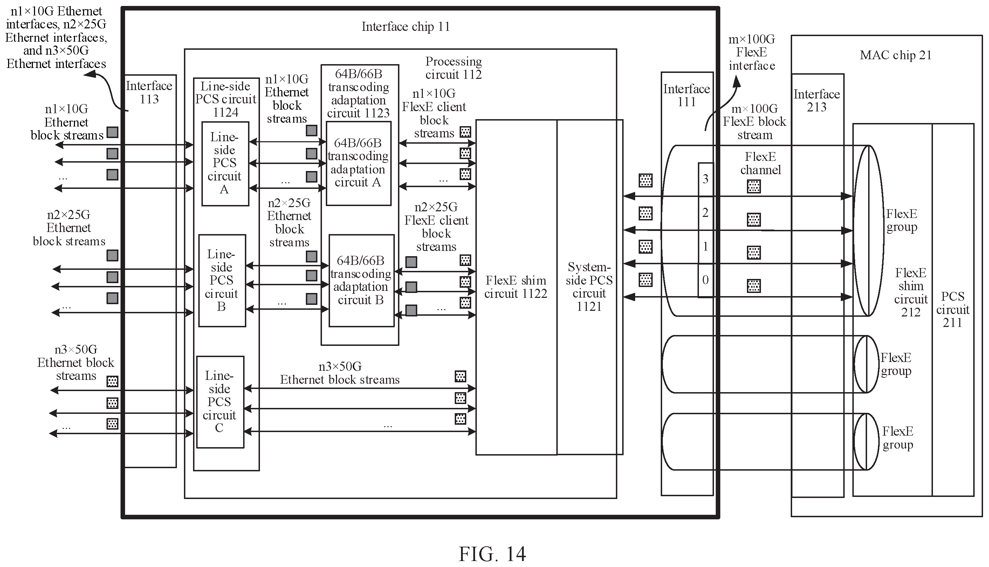

FIG. 14 is a diagram of a structure of the interface chip 11 in the optical module 10 in FIG. 11. A line-side PCS circuit 1124 in the interface chip 11 includes a line-side PCS circuit A, a line-side PCS circuit B, and a line-side PCS circuit C. The line-side PCS circuit A is configured to perform PCS layer processing on the n1 Ethernet block streams with a rate of 10G. The line-side PCS circuit B is configured to perform PCS layer processing on the n2 Ethernet block streams with a rate of 25G. The line-side PCS circuit C is configured to perform PCS layer processing on the n3 Ethernet block streams with a rate of 50G.

A 64B/66B transcoding adaptation circuit 1123 includes a 64B/66B transcoding adaptation circuit A and a 64B/66B transcoding adaptation circuit B. The 64B/66B transcoding adaptation circuit A corresponds to Ethernet interfaces with a rate of 10G. The 64B/66B transcoding adaptation circuit B corresponds to Ethernet interfaces with a rate of 25G. Because a FlexE block in a FlexE block stream with a rate of 50G and an Ethernet block in an Ethernet block stream with a rate of 50G have a same encoding format, a 64B/66B transcoding and adaptation module does not need to be deployed for the FlexE block stream with a rate of 50G.

The following further describes step S530 of the method shown in FIG. 12 with reference to the internal structure of the chip shown in FIG. 14. S530 may include S530a to S530c below.

S530a: The FlexE shim circuit 1122 performs slot mapping on the FlexE block stream with a rate of m×100G, to obtain n1 FlexE client block streams with a rate of 10G, n2 FlexE client block streams with a rate of 25G, and n3 FlexE client block streams with a rate of 50G. The FlexE shim circuit 1122 sends the n1 FlexE client block streams with a rate of 10G to the 64B/66B transcoding adaptation circuit A, sends the n2 FlexE client block streams with a rate of 25G to the 64B/66B transcoding adaptation circuit B, and sends the n3 FlexE client block streams with a rate of 50G to the line-side PCS circuit C as Ethernet block streams.

S530b: The 64B/66B transcoding adaptation circuit A converts an encoding format of each block in each of the n1 FlexE client block streams with a rate of 10G from the FlexE encoding format shown in FIG. 5 into the Ethernet encoding format shown in FIG. 6, to obtain the n1 Ethernet block streams with a rate of 10G. The 64B/66B transcoding adaptation circuit A sends the n1 Ethernet block streams with a rate of 10G to the line-side PCS circuit A. The 64B/66B transcoding adaptation circuit B converts an encoding format of each block in each of the n2 FlexE client block streams with a rate of 25G from the FlexE encoding format shown in FIG. 5 into the Ethernet encoding format shown in FIG. 6, to obtain the n2 Ethernet block streams with a rate of 25G. The 64B/66B transcoding adaptation circuit B sends the n2 Ethernet block streams with a rate of 25G to the line-side PCS circuit B.

S530c: After performing PCS layer processing on the n1 Ethernet block streams with a rate of 10G, the line-side PCS circuit A outputs n1 processed Ethernet block streams with a rate of 10G to the line-side interface 113. After performing PCS layer processing on the n2 Ethernet block streams with a rate of 25G, the line-side PCS circuit B outputs the n2 processed Ethernet block streams with a rate of 25G to the line-side interface 113.

The following further describes step S640 of the method shown in FIG. 13 with reference to the internal structure of the chip shown in FIG. 14. Step S640 may include S640a to S640c below.

S640a: The line-side PCS circuit A receives the n1 Ethernet block streams with a rate of 10G from the line-side interface 113, and after performing PCS layer processing on the n1 Ethernet block streams with a rate of 10G, the line-side PCS circuit A outputs n1 processed Ethernet block streams with a rate of 10G to the 64B/66B transcoding adaptation circuit A. The line-side PCS circuit B receives the n2 Ethernet block streams with a rate of 25G from the line-side interface 113, and after performing PCS layer processing on the n2 Ethernet block streams with a rate of 25G, the line-side PCS circuit B outputs n2 processed Ethernet block streams with a rate of 25G to the 64B/66B transcoding adaptation circuit B. The line-side PCS circuit B receives the n3 Ethernet block streams with a rate of 50G from the line-side interface 113, and after performing PCS layer processing on the n3 Ethernet block streams with a rate of 50G, the line-side PCS circuit B outputs n3 processed Ethernet block streams with a rate of 50G to the FlexE shim circuit 1122.

S640b: The 64B/66B transcoding adaptation circuit A converts an encoding format of each block in each of the n1 Ethernet block streams with a rate of 10G from the Ethernet encoding format shown in FIG. 6 into the FlexE encoding format shown in FIG. 5, to obtain n1 FlexE block streams with a rate of 10G. The 64B/66B transcoding adaptation circuit A sends the n1 FlexE block streams with a rate of 10G to the FlexE shim circuit 1122. The 64B/66B transcoding adaptation circuit B converts an encoding format of each block in each of the n2 Ethernet block streams with a rate of 25G from the Ethernet encoding format shown in FIG. 6 into the FlexE encoding format shown in FIG. 5, to obtain n2 FlexE block streams with a rate of 25G. The 64B/66B transcoding adaptation circuit B sends the n2 FlexE block streams with a rate of 25G to the FlexE shim circuit 1122.

S640c. The FlexE shim circuit 1122 performs slot mapping on n1 FlexE client block streams with a rate of 10G, n2 FlexE client block streams with a rate of 25G, and n3 FlexE client block streams with a rate of 50G, to obtain the FlexE block stream with a rate of m×100G.

According to the method provided in this embodiment, one optical module breaks out Ethernet interfaces with a plurality of rates. After the optical module is mounted on a board, the board can send a plurality of Ethernet block streams with different rates through the optical module, so that a requirement for transmitting Ethernet block streams with different rates is satisfied. An interface board of a corresponding rate does not need to be separately deployed for a transmission requirement of each rate, and therefore fewer interface boards of different rates are used and costs are reduced.

An embodiment of this application provides an optical module. The optical module may be the 10×10G breakout optical module shown in FIG. 3 in Instance 1, or may be the 8×25G breakout optical module shown in FIG. 7 in Instance 2, or may be the 8×50 breakout optical module shown in FIG. 9 in Instance 3, or may be the breakout optical module shown in FIG. 11 in Instance 4. The optical module includes a FlexE infterface, a processing circuit, an optoelectrical conversion device, and a plurality of optical interfaces.

For example, the FlexE interface is the system-side interface 111 in FIG. 3 in Instance 1, and the FlexE interface may be a 100G interface. For another example, the FlexE interface is the system-side interface 111 in FIG. 7 in Instance 2, and the FlexE interface may be a 200G interface. For still another example, the FlexE interface is the system-side interface 111 in FIG. 9 in Instance 3, and the FlexE interface may be a 400G interface. For yet another example, the FlexE interface is the system-side interface 111 in FIG. 11 in Instance 4, and the FlexE interface may be an m×100G interface. The FlexE interface is configured to receive a first FlexE block stream from a network device through a FlexE channel, and the FlexE interface is communicatively connected to the network device through the FlexE channel.

To distinguish between an Ethernet block stream transmitted from the network device to the optical module and an Ethernet block stream transmitted from the optical module to the network device, the Ethernet block stream transmitted from the network device to the optical module is referred to as a first Ethernet block stream below, and the Ethernet block stream transmitted from the optical module to the network device is referred to as a first Ethernet block stream below.

For example, the processing circuit is the processing circuit 112 in FIG. 3 in Instance 1. For another example, the processing circuit is the processing circuit 112 in FIG. 7 in Instance 2. For still another example, the processing circuit is the processing circuit 112 in FIG. 9 in Instance 3. For yet another example, the processing circuit is the processing circuit 112 in FIG. 11 in Instance 4. The processing circuit is configured to obtain a plurality of first Ethernet block streams based on the first FlexE block stream. The optoelectrical conversion device is configured to perform electrical-to-optical conversion on the plurality of first Ethernet block streams, to obtain a plurality of first optical signals. The plurality of optical interfaces are configured to send the plurality of first optical signals to an optical fiber. The first Ethernet block stream is an Ethernet block stream transmitted from the network device to the optical module. To distinguish between a FlexE client block stream transmitted from the network device to the optical module and a FlexE client block stream transmitted from the optical module to the network device, the FlexE client block stream transmitted from the network device to the optical module is referred to as a first FlexE client block stream, and the FlexE client block stream transmitted from the optical module to the network device is referred to as a first FlexE client block stream.

In a possible implementation, the processing circuit includes a FlexE shim circuit and a transcoding circuit. The FlexE shim circuit is configured to obtain a plurality of first FlexE client block streams based on the first FlexE block stream, where the plurality of first FlexE client block streams include a block in a FlexE encoding format. The transcoding circuit is configured to convert an encoding format of a block in the plurality of first FlexE client block streams from the FlexE encoding format into an Ethernet encoding format, to obtain the plurality of first Ethernet block streams. The FlexE shim circuit may be the FlexE shim circuit 1122 in FIG. 4 in Instance 1, or may be the FlexE shim circuit 1122 in FIG. 8 in Instance 2, or may be the FlexE shim circuit 1122 in FIG. 10 in Instance 3, or may be the FlexE shim circuit 1122 in FIG. 14 in Instance 4. The transcoding circuit may be the 64B/66B transcoding adaptation circuit 1123 in FIG. 4 in Instance 1, or may be the 64B/66B transcoding adaptation circuit 1123 in FIG. 8 in Instance 2, or may be the 64B/66B transcoding adaptation circuit 1123 in FIG. 10 in Instance 3, or may be the 64B/66B transcoding adaptation circuit 1123 in FIG. 14 in Instance 4.

In a possible implementation, the FlexE shim circuit is configured to perform slot mapping on the first FlexE block stream based on slot configuration information, to obtain the plurality of first FlexE client block streams. The slot configuration information indicates at least one of a quantity of slots occupied by the plurality of first FlexE client block streams or slot positions occupied by the plurality of first FlexE client block streams.

In a possible implementation, the plurality of first FlexE client block streams include a first FlexE client block stream with a first transmission rate and a first FlexE client block stream with a second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

In a possible implementation, a transmission rate of each of the plurality of first Ethernet block streams is less than a transmission rate of the first FlexE block stream.

In a possible implementation, the plurality of optical interfaces are further configured to receive a plurality of second optical signals from the optical fiber, where the plurality of second optical signals include a plurality of second Ethernet block streams. The optoelectrical conversion device is further configured to perform optical-to-electrical conversion on the plurality of second optical signals, to obtain a plurality of electrical signals, where the plurality of electrical signals include the plurality of second Ethernet block streams. The processing circuit is further configured to obtain a second FlexE block stream based on the plurality of second Ethernet block streams. The FlexE interface is further configured to send the second FlexE block stream to the network device through the FlexE channel.

In a possible implementation, the processing circuit includes a FlexE shim circuit and a transcoding circuit. The transcoding circuit is configured to convert an encoding format of a block in the plurality of second Ethernet block streams from the Ethernet encoding format into the FlexE encoding format, to obtain a plurality of second FlexE client block streams. The FlexE shim circuit is configured to obtain the second FlexE block stream based on the plurality of second FlexE client block streams.

In a possible implementation, the optical module includes an interface chip, and the FlexE interface and the processing circuit are both disposed in the interface chip.

Embodiments in this specification are described in a progressive manner. For same or similar parts in embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not intended to describe a particular order of the objects, and cannot be understood as an indication or implication of relative importance. For example, the first FlexE block stream and the second FlexE block stream are used to distinguish between different FlexE block streams, but are not used to describe a specific order of the FlexE block streams. It cannot be understood that the first FlexE block stream is more important than the second FlexE block stream.

In embodiments of this application, unless otherwise specified, "at least one" means one or more, and "a plurality of" means two or more. For example, the plurality of first Ethernet block streams are two or more first Ethernet block streams.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semi-conductor medium (for example, a solid-state drive Solid State Drive (SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An optical module, comprising a flexible Ethernet FlexE interface, a processing circuit, an optoelectrical conversion device, and a plurality of optical interfaces, wherein
the FlexE interface is configured to receive a first FlexE block stream from a network device through a FlexE channel, and the FlexE interface is communicatively connected to the network device through the FlexE channel;
the processing circuit is configured to obtain a plurality of first Ethernet block streams based on the first FlexE block stream;
the optoelectrical conversion device is configured to perform electrical-to-optical conversion on the plurality of first Ethernet block streams, to obtain a plurality of first optical signals; and
the plurality of optical interfaces are configured to send the plurality of first optical signals to an optical fiber.

2. The optical module according to claim 1, wherein the processing circuit comprises a FlexE shim circuit and a transcoding circuit;
the FlexE shim circuit is configured to obtain a plurality of first FlexE client block streams based on the first FlexE block stream, wherein the plurality of first FlexE client block streams comprise a block in a FlexE encoding format; and
the transcoding circuit is configured to convert an encoding format of a block in the plurality of first FlexE client block streams from the FlexE encoding format into an Ethernet encoding format, to obtain the plurality of first Ethernet block streams.

3. The optical module according to claim 2, wherein the FlexE shim circuit is configured to perform slot mapping on the first FlexE block stream based on slot configuration information, to obtain the plurality of first FlexE client block streams, and the slot configuration information indicates at least one of a quantity of slots occupied by the plurality of first FlexE client block streams or slot positions occupied by the plurality of first FlexE client block streams.

4. The optical module according to claim 3, wherein the plurality of first Ethernet block streams comprise a first Ethernet block stream with a first transmission rate and a first Ethernet block stream with a second transmission rate, the plurality of first FlexE client block streams comprise a first FlexE client block stream with the first transmission rate and a first FlexE client block stream with the second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

5. The optical module according to any one of claims 1 to 4, wherein a transmission rate of each of the plurality of first Ethernet block streams is less than a transmission rate of the first FlexE block stream.

6. The optical module according to any one of claims 1 to 5, wherein the plurality of optical interfaces are further configured to receive a plurality of second optical signals from the optical fiber, and the plurality of second optical signals comprise a plurality of second Ethernet block streams;
the optoelectrical conversion device is further configured to perform optical-to-electrical conversion on the plurality of second optical signals, to obtain a plurality of electrical signals, wherein the plurality of electrical signals comprise the plurality of second Ethernet block streams;
the processing circuit is further configured to obtain a second FlexE block stream based on the plurality of second Ethernet block streams; and
the FlexE interface is further configured to send the second FlexE block stream to the network device through the FlexE channel.

7. The optical module according to claim 6, wherein the processing circuit comprises a FlexE shim circuit and a transcoding circuit;
the transcoding circuit is configured to convert an encoding format of a block in the plurality of second Ethernet block streams from the Ethernet encoding format into the FlexE encoding format, to obtain a plurality of second FlexE client block streams; and
the FlexE shim circuit is configured to obtain the second FlexE block stream based on the plurality of second FlexE client block streams.

8. The optical module according to claim 1, wherein the optical module comprises an interface chip, and the FlexE interface and the processing circuit are both disposed in the interface chip.

9. An optical module, comprising:
a housing, provided with an electrical interface and a plurality of optical interfaces, wherein the electrical interface is connected to a network device outside the optical module, and the plurality of optical interfaces are connected to an optical fiber outside the optical module;
an interface chip, disposed in the housing, wherein the interface chip comprises a flexible Ethernet FlexE interface, a processing circuit, and a plurality of Ethernet interfaces, the FlexE interface is opposite to the electrical interface, the processing circuit is disposed between the FlexE interface and the plurality of Ethernet interfaces, the processing circuit is configured to: convert a FlexE block stream received by the FlexE interface into a plurality of Ethernet block streams, and output the plurality of Ethernet block streams to the plurality of Ethernet interfaces, and the plurality of Ethernet interfaces are in one-to-one correspondence with the plurality of optical interfaces; and
an optoelectrical conversion device, disposed in the housing, wherein one end of the optoelectrical conversion device is electrically connected to the plurality of Ethernet interfaces of the interface chip, and the other end of the optoelectrical conversion device is opposite to the plurality of optical interfaces.

10. A network device, comprising a processor, a first flexible Ethernet FlexE interface, and an optical module, wherein the optical module comprises a second FlexE interface, a processing circuit, an optoelectrical conversion device, and a plurality of optical interfaces, and the first FlexE interface is communicatively connected to the second FlexE interface through a FlexE channel;
the processor is configured to generate a first FlexE block stream;
the first FlexE interface is configured to send the first FlexE block stream to the second FlexE interface through the FlexE channel;
the processing circuit is configured to obtain a plurality of first Ethernet block streams based on the first FlexE block stream;
the optoelectrical conversion device is configured to perform electrical-to-optical conversion on the plurality of first Ethernet block streams, to obtain a plurality of first optical signals; and
the plurality of optical interfaces are configured to send the plurality of first optical signals to an optical fiber.

11. A data transmission method, applied to an optical module, comprising:
receiving a first flexible Ethernet FlexE block stream from a first network device through a FlexE channel, wherein the optical module is communicatively connected to the first network device through the FlexE channel;
obtaining a plurality of first Ethernet block streams based on the first FlexE block stream;
performing electrical-to-optical conversion on the plurality of first Ethernet block streams, to obtain a plurality of first optical signals; and
sending the plurality of first optical signals to a second network device through an optical fiber.

12. The method according to claim 11, wherein obtaining the plurality of first Ethernet block streams based on the first FlexE block stream comprises:
obtaining a plurality of first FlexE client block streams based on the first FlexE block stream, wherein the plurality of first FlexE client block streams comprise a block in a FlexE encoding format; and
converting an encoding format of a block in the plurality of first FlexE client block streams from the FlexE encoding format into an Ethernet encoding format, to obtain the plurality of first Ethernet block streams.

13. The method according to claim 12, wherein obtaining the plurality of first FlexE client block streams based on the first FlexE block stream comprises:
performing slot mapping on the first FlexE block stream based on slot configuration information, to obtain the plurality of first FlexE client block streams, wherein the slot configuration information indicates at least one of a quantity of slots occupied by the plurality of first FlexE client block streams or slot positions occupied by the plurality of first FlexE client block streams.

14. The method according to claim 13, wherein the plurality of first FlexE client block streams comprise a first FlexE client block stream with a first transmission rate and a first FlexE client block stream with a second transmission rate, the second transmission rate is different from the first transmission rate, the slot configuration information indicates that the first FlexE client block stream with the first transmission rate occupies a first quantity of slots and the first FlexE client block stream with the second transmission rate occupies a second quantity of slots, and the second quantity is different from the first quantity.

15. The method according to any one of claims 11 to 14, wherein a transmission rate of each of the plurality of first Ethernet block streams is less than a transmission rate of the first FlexE block stream.

16. The method according to any one of claims 11 to 15, wherein the method further comprises:
receiving a plurality of second optical signals from the second network device, wherein the plurality of second optical signals comprise a plurality of second Ethernet block streams;
performing optical-to-electrical conversion on the plurality of second optical signals, to obtain a plurality of electrical signals, wherein the plurality of electrical signals comprise the plurality of second Ethernet block streams;
obtaining a second FlexE block stream based on the plurality of second Ethernet block streams; and
sending the second FlexE block stream to the first network device through the FlexE channel.

17. The method according to claim 16, wherein obtaining the second FlexE block stream based on the plurality of second Ethernet block streams comprises:
converting an encoding format of a block in the plurality of second Ethernet block streams from the Ethernet encoding format into the FlexE encoding format, to obtain a plurality of second FlexE client block streams; and
obtaining the second FlexE block stream based on the plurality of second FlexE client block streams.
